(19) Europäisches Patentamt
European Patent Office
Office européen des brevets

(11) EP 4 357 155 A2

(12) EUROPEAN PATENT APPLICATION

(43) Date of publication:
24.04.2024 Bulletin 2024/17

(21) Application number: 23204061.8

(22) Date of filing: 17.10.2023

(51) International Patent Classification (IPC):
*B60C 1/00* (2006.01) *C08L 7/02* (2006.01)

(52) Cooperative Patent Classification (CPC):
(C-Sets available)
C08L 7/02; B60C 1/00; B60C 1/0016 (Cont.)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 20.10.2022 JP 2022168335
12.07.2023 JP 2023114573

(71) Applicant: Sumitomo Rubber Industries, Ltd.
Kobe-shi, Hyogo 651-0072 (JP)

(72) Inventors:
- MIYAZAKI, Sumiko
Kobe-shi, Hyogo, 651-0072 (JP)
- SATO, Daisuke
Kobe-shi, Hyogo, 651-0072 (JP)

(74) Representative: Manitz Finsterwald
Patent- und Rechtsanwaltspartnerschaft mbB
Martin-Greif-Strasse 1
80336 München (DE)

# (54) TIRE

(57) Provided is a tire with excellent overall performance in terms of handling stability during high-speed driving and fuel economy. Included is a tire including a tire component including a rubber composition, the rubber composition containing: organic fibers; a polymer having a moiety derived from at least one compound selected from the group consisting of maleic acid, maleic anhydride, and derivatives thereof; and a filler, the tire component having a complex modulus of elasticity at 30°C (30°C E*a (MPa)) in a tire circumferential direction and a loss tangent at 30°C (30°C tan δa) in the tire circumferential direction which satisfy the following formula:

$$30°C\ E^*a / 30°C\ \tan\delta a \geq 33.$$

EP 4 357 155 A2

(52) Cooperative Patent Classification (CPC): (Cont.)

C-Sets
**C08L 7/02, C08L 9/10, C08L 1/02, C08L 15/00,
C08L 91/00, C08L 91/06, C08K 3/04, C08K 3/36,
C08K 5/09, C08K 3/22, C08K 3/06, C08K 5/548,
C08K 5/18, C08K 5/47**

**Description**

TECHNICAL FIELD

The present invention relates to a tire.

BACKGROUND ART

Tires are required to have various properties, such as fuel economy and handling stability. In recent years, tires particularly have been desired to have both handling stability during high-speed driving and fuel economy.

SUMMARY OF INVENTION

TECHNICAL PROBLEM

The present invention aims to solve the above problem and provide a tire with excellent overall performance in terms of handling stability during high-speed driving and fuel economy.

SOLUTION TO PROBLEM

The present invention (the first aspect of the present invention) relates to a tire including a tire component including a rubber composition, the rubber composition containing: organic fibers; a polymer having a moiety derived from at least one compound selected from the group consisting of maleic acid, maleic anhydride, and derivatives thereof; and a filler,
the tire component having a complex modulus of elasticity at 30°C (30°C E*a (MPa)) in a tire circumferential direction and a loss tangent at 30°C (30°C tan δa) in the tire circumferential direction which satisfy the following formula:

$$30°C\ E^*a/30°C\ \tan\delta a \geq 33.$$

The present invention (the second aspect of the present invention) also relates to a masterbatch, containing: a microfibrillated cellulose having an average fiber diameter of 10 um or less; and a diene polymer having a moiety derived from at least one compound selected from the group consisting of carboxylic acid and carboxylic anhydride,
the microfibrillated cellulose having an average fiber diameter A (um) and the diene polymer having a number average molecular weight B, the A and the B satisfying the following formula:

$$(A \times B)/1000 \leq 350.$$

ADVANTAGEOUS EFFECTS OF INVENTION

The first aspect of the present invention relates to a tire including a tire component including a rubber composition, the rubber composition containing: organic fibers; a polymer having a moiety derived from at least one compound selected from the group consisting of maleic acid, maleic anhydride, and derivatives thereof; and a filler,
the tire component having a complex modulus of elasticity at 30°C (30°C E*a (MPa)) in a tire circumferential direction and a loss tangent at 30°C (30°C tan δa) in the tire circumferential direction which satisfy the following formula:

$$30°C\ E^*a/30°C\ \tan\delta a \geq 33.$$

Thus, the first aspect of the present invention can provide a tire with excellent overall performance in terms of handling stability during high-speed driving and fuel economy.
The second aspect of the present invention relates to a masterbatch, containing: a microfibrillated cellulose having an average fiber diameter of 10 μm or less; and a diene polymer having a moiety derived from at least one compound selected from the group consisting of carboxylic acid and carboxylic anhydride,

the microfibrillated cellulose having an average fiber diameter A (μm) and the diene polymer having a number average molecular weight B, the A and the B satisfying the following formula:

$$(A \times B)/1000 \leq 350.$$

A rubber composition containing the masterbatch can improve overall performance in terms of reinforcement (tensile strength at break, elastic modulus) and fuel economy.

DESCRIPTION OF EMBODIMENTS

Herein, the first aspect of the present invention and the second aspect of the present invention are collectively referred to as the present invention. The first aspect of the invention is described first, and next the second aspect of the present invention is described.

(First aspect of the present invention)

First, the first aspect of the present invention is described.

[Tire]

The tire according to the first aspect of the present invention includes a tire component including a rubber composition. The rubber composition contains organic fibers, a polymer having a moiety derived from at least one compound selected from the group consisting of maleic acid, maleic anhydride, and derivatives thereof, and a filler.

The tire component has a complex modulus of elasticity at 30°C (30°C E*a (MPa)) in a tire circumferential direction and a loss tangent at 30°C (30°C tan δa) in the tire circumferential direction which satisfy the following formula: 30°C E*a/30°C tan δa ≥ 33.

The mechanism for the advantageous effect is not clear, but it is believed to be as follows.

Compounding the polymer having a moiety derived from at least one compound selected from the group consisting of maleic acid, maleic anhydride, and derivatives thereof causes the interaction between the moiety derived from the compound in the polymer and organic fibers (for example, OH groups of the organic fibers) to enhance the dispersion of the organic fibers in the rubber, thereby improving reinforcement. Moreover, the rubber strongly binds to the organic fibers to have a higher elasticity, thereby suppressing heat generation.

In addition, the stiffness in the tire circumferential direction is improved by controlling the 30°C E*a in the tire circumferential direction to be high, while rolling resistance is reduced by controlling the 30°C tan δa in the tire circumferential direction to be low.

Accordingly, the first aspect of the present invention presumably improves overall performance in terms of handling stability during high-speed driving and fuel economy.

(Organic fibers)

The rubber composition contains organic fibers.

In the first aspect of the present invention, the term "organic fibers" refers to a fibrous material mainly made of an organic substance. One type of organic fibers may be used alone, or two or more types may be used in combination.

Examples of the organic fibers include hard-to-disperse fillers such as fibrillated organic fibers, short fiber celluloses, and gel compounds.

The term "fibrillated organic fibers" refers to organic fibers which have been disintegrated into fibrils.

Preferred examples of such organic fibers include biomass-derived organic fibers. Specific examples include nanocellulose, chitin nanofibers, and chitosan nanofibers.

The aspect ratio (average fiber length/average fiber diameter) of the organic fibers is preferably 0.1 or higher, more preferably 0.3 or higher, still more preferably 0.5 or higher. The upper limit is not limited, and it is preferably 1000 or lower, more preferably 700 or lower, still more preferably 500 or lower. When the aspect ratio is within the range indicated above, the advantageous effect tends to be better achieved.

The term "nanocellulose" refers to a cellulose fiber having a nano-scale fiber size (diameter) and may be prepared by disintegrating (fibrillating) a cellulose fiber-containing material (e.g., wood pulp) into nano-sized fibers. In a nanocellulose, cellulose molecules are aggregated together into nano-sized diameter fibers, and the cellulose molecules are linked by hydrogen bonding. In plant cell walls, the smallest units are cellulose microfibrils each having a width of

about 4 nm (single cellulose nanofibers) and they are basic structural materials of plants. A nanocellulose is a nano-sized cellulose formed of a cellulose microfibril or an aggregate of cellulose microfibrils.

Suitable examples of the nanocellulose include microfibrillated celluloses (cellulose nanofibers (CNF)) and cellulose nanocrystals (CNC). One type of a nanocellulose may be used alone or two or more types may be used in combination.

CNF can be prepared by treating cellulose fibers via, for example, mechanical fibrillation.

A method for preparing the CNF may be performed by fibrillating a cellulose fiber-containing material such as pulp. The fibrillation may be performed by, for example, mechanically grinding or beating a water suspension or slurry of the cellulose fiber-containing material using a refiner, a high-pressure homogenizer, a grinder, a single or multi-screw kneader (preferably twin screw kneader), a bead mill, or other devices.

In view of dispersibility in a matrix and other properties, the CNF preferably has an average fiber diameter of 10 μm or less. The average fiber diameter is more preferably 500 nm or less, still more preferably 100 nm or less, particularly preferably 50 nm or less. The lower limit of the average fiber diameter is not limited, and it is preferably 1 nm or more, more preferably 2 nm or more, still more preferably 3 nm or more.

The CNF preferably has an average fiber length of 100 nm or more, more preferably 300 nm or more, still more preferably 500 nm or more. The upper limit is preferably 50 um or less, more preferably 10 μm or less.

The aspect ratio (average fiber length/average fiber diameter) of the CNF is preferably 10 or higher, more preferably 15 or higher, still more preferably 20 or higher. The upper limit is not limited, and it is preferably 1000 or lower, more preferably 700 or lower, still more preferably 500 or lower. When the aspect ratio is within the range indicated above, the advantageous effect tends to be better achieved.

CNC can be prepared by chemically treating cellulose fibers via, for example, acid hydrolysis.

CNC can be prepared by a known method. For example, CNC can be prepared by a chemical technique which includes treating a water suspension or slurry of the cellulose fiber-containing material via, for example, acid hydrolysis with an acid such as sulfuric acid, hydrochloric acid, or hydrobromic acid.

In view of dispersibility in a matrix and other properties, the CNC preferably has an average fiber diameter of 10 μm or less. The average fiber diameter is more preferably 500 nm or less, still more preferably 100 nm or less, particularly preferably 50 nm or less. The lower limit of the average fiber diameter is not limited, and it is preferably 1 nm or more, more preferably 2 nm or more, still more preferably 3 nm or more.

The CNC preferably has an average fiber length of 50 nm or more, more preferably 80 nm or more, still more preferably 100 nm or more. The upper limit is preferably 800 nm or less, more preferably 500 nm or less, still more preferably 300 nm or less.

The aspect ratio (average fiber length/average fiber diameter) of the CNC is preferably 0.1 or higher, more preferably 0.3 or higher, still more preferably 0.5 or higher. The upper limit is not limited, and it is preferably 500 or lower, more preferably 200 or lower, still more preferably 100 or lower. When the aspect ratio is within the range indicated above, the advantageous effect tends to be better achieved.

Herein, the average fiber diameter and average fiber length of the nanocellulose may be measured by image analysis using scanning electron micrographs, image analysis using transmission electron micrographs, image analysis using atomic force micrographs, X-ray scattering data analysis, the aperture impedance method (Coulter principle), or other methods. Herein, the average fiber diameter and average fiber length of the nanocellulose (cellulose fiber) typically refer to the average fiber diameter and average fiber length, respectively, of the aggregates of cellulose fibers formed by aggregation of cellulose molecules.

The CNF usually has a degree of crystallinity of 90% or less, and the degree of crystallinity may be 800 or less or 700 or less. In view of dispersibility in a rubber matrix and other properties, the lower limit of the degree of crystallinity is preferably 300 or more, more preferably 500 or more, still more preferably 600 or more.

In view of dispersibility in a rubber matrix and other properties, the CNC preferably has a degree of crystallinity of 70% or more, more preferably 750 or more, still more preferably 800 or more. The upper limit of the degree of crystallinity is not limited and may be 1000.

Herein, the degree of crystallinity of the nanocellulose refers to the degree of cellulose I crystallinity calculated from diffraction intensity data obtained by X-ray diffraction in accordance with the Segal's method and is defined by the following equation:

$$\text{Degree of cellulose I crystallinity (\%)} = [(I22.6 - I18.5)/I22.6] \times 100$$

where I22.6 denotes the diffraction intensity of the lattice plane (002) (diffraction angle 2θ = 22.6°), and I18.5 denotes

the diffraction intensity of the amorphous portion (diffraction angle 2θ = 18.5°) in X-ray diffraction.

Examples of the raw material (cellulose) of the nanocellulose include plant-derived celluloses such as softwood kraft pulp, hardwood kraft pulp, Manila hemp pulp, sisal hemp pulp, bamboo pulp, esparto pulp, and cotton pulp; regenerated celluloses such as regenerated celluloses (polynosic rayons) with a high degree of polymerization produced by spinning in a low acid bath, and solvent-spun rayons produced using amine-oxide organic solvents; bacterial celluloses; animal-derived celluloses such as sea squirt-derived cellulose; and nanocelluloses produced by electrospinning.

The nanocellulose may be produced from a plant-derived cellulose by a physical or chemical method. Examples of the physical (fibrillation) method include a high-pressure homogenizer method, a microfluidizer method, a ball mill method, and a grinding mill method. Examples of the chemical method include a TEMPO oxidation method.

The nanocellulose may also be, for example, one in which some lignin or hemicellulose remains or one which has a chemically modified surface (modified pulp). For example, the modified pulp may be one in which the hydroxyl groups of cellulose fibers are modified with at least one method selected from esterification or etherification. Moreover, the cross-sectional shape of the nanocellulose may be either anisotropic (e.g., flat) or isotropic (e.g., perfect circle or regular polygon).

The term "short fiber celluloses" refers to short fibers (cut fibers) obtained by cutting organic fibers. Short fiber celluloses are well-dispersed in rubber and therefore can maintain or improve the tensile strength at break of elastomers without impairing it, whereby the elastomers have good physical properties.

The fiber width of the short fiber celluloses is preferably 3 to 200 um. Usually, it is preferable that fibrous fillers having a smaller fiber width are compounded in a thermoplastic elastomer composite in view of reinforcement of the elastomer. However, fibrous fillers having a small fiber width tend not to orientate themselves. Thus, in view of the balance between the reinforcement of the elastomer and the orientation of the fibers and in view of dispersion in the elastomer, the fiber width is preferably 10 um or larger, more preferably 15 um or larger, still more preferably 20 um or larger, and it is preferably 120 um or smaller, more preferably 80 um or smaller, still more preferably 50 um or smaller.

The fiber length of the short fiber celluloses is preferably 20 to 1000 um. Like the fiber width, in view of the balance between the reinforcement of the elastomer and the orientation of the fibers and in view of dispersion in the elastomer, the fiber length is preferably 50 um or longer, more preferably 100 um or longer, still more preferably 200 μm or longer, and it is preferably 700 um or shorter, more preferably 500 um or shorter.

The ratio of the fiber length to the fiber width (fiber length/fiber width) of the short fiber celluloses is preferably 5 to 1000. Like the fiber width, in view of the balance between the reinforcement of the elastomer and the orientation of the fibers, the ratio of the fiber length to the fiber width is preferably 6 or higher, more preferably 10 or higher, and it is preferably 800 or lower, more preferably 500 or lower, still more preferably 400 or lower, particularly preferably 300 or lower.

The fiber width and fiber length of the short fiber celluloses may be measured by image analysis using scanning atomic force micrographs, image analysis using scanning electron micrographs, image analysis using transmission electron micrographs, X-ray scattering data analysis, the aperture impedance method (Coulter principle), or other methods.

The term "gel compounds" refers to materials produced by gelation of microfibrillated plant fibers or short fiber celluloses. Gel compounds produced as described above may be highly dispersible. The gelation may be performed by any method, such as by stirring with an ultra-high-pressure homogenizer or other devices.

The amount of organic fibers per 100 parts by mass of the rubber component content in the rubber composition is preferably 1 part by mass or more, more preferably 5 parts by mass or more, still more preferably 10 parts by mass or more, further preferably 15 parts by mass or more, further preferably 20 parts by mass or more. The amount is preferably 100 parts by mass or less, more preferably 50 parts by mass or less, still more preferably 40 parts by mass or less. When the amount is within the range indicated above, the advantageous effect tends to be better achieved. Here, the amount of nanocellulose, the amount of CNF, the amount of CNC, and the total amount of CNF and CNC are also desirably within the above range.

(Polymer having a moiety derived from at least one compound selected from the group consisting of maleic acid, maleic anhydride, and derivatives thereof)

Preferred examples of the derivatives of maleic acid and maleic anhydride in the polymer include compounds having a moiety derived from maleic acid and/or maleic anhydride and also has an ester group and/or an anionic group. Specific examples include esters of maleic acid or maleic anhydride and salts of maleic acid or maleic anhydride. These may be used alone or in combinations of two or more.

Examples of the esters of maleic acid include maleic acid monoalkyl esters such as monomethyl maleate and monoethyl maleate; maleic acid monoalkenyl esters; maleic acid monoaryl esters; and maleic acid dialkyl esters. Examples of the esters of maleic anhydride include compounds corresponding to these esters of maleic acid.

Examples of the salts of maleic acid include ammonium salts and metal salts (alkali metal salts such as sodium

salts and potassium salts, alkaline earth metal salts such as calcium salts, and salts of other metals such as zinc salts) of maleic acid. Examples of the salts of maleic anhydride include compounds corresponding to these salts of maleic acid. When the polymer is a compound having a moiety derived from a maleic acid salt or a maleic anhydride salt, it is sufficient that the compound includes at least one salt structure.

Examples of the polymer having a moiety derived from at least one compound selected from the group consisting of maleic acid, maleic anhydride, and derivatives thereof include copolymers of an aromatic vinyl compound and maleic acid and/or maleic anhydride, and derivatives thereof. These may be used alone or in combinations of two or more.

Examples of the copolymers of an aromatic vinyl compound and maleic acid and/or maleic anhydride, and derivatives thereof include copolymers of an aromatic vinyl compound unit (a structural unit derived from an aromatic vinyl compound) and a unit of at least one compound selected from the group consisting of maleic acid, maleic anhydride, and derivatives thereof (a structural unit derived from at least one compound selected from the group consisting of maleic acid, maleic anhydride, and derivatives thereof). Specific examples include copolymers of an aromatic vinyl compound and maleic acid, copolymers of an aromatic vinyl compound and maleic anhydride, copolymers of an aromatic vinyl compound and a maleic acid ester, copolymers of an aromatic vinyl compound and a maleic anhydride ester, copolymers of an aromatic vinyl compound and a maleic acid salt, and copolymers of an aromatic vinyl compound and a maleic anhydride salt.

Examples of the compound for the aromatic vinyl compound unit include styrene, α-methylstyrene, β-methylstyrene, o-methylstyrene, m-methylstyrene, p-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-chlorostyrene, m-chlorostyrene, p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-t-butylstyrene, m-t-butylstyrene, p-t-butylstyrene, o-methoxystyrene, m-methoxystyrene, p-methoxystyrene, o-chloromethylstyrene, m-chloromethylstyrene, p-chloromethylstyrene, o-bromomethylstyrene, m-bromomethylstyrene, p-bromomethylstyrene, silyl-substituted styrene derivatives, indene, and vinylnaphthalene. These compounds for the aromatic vinyl compound unit may be used alone or in combinations of two or more. To better achieve the advantageous effect, styrene, α-methylstyrene, and mixtures thereof are preferred, with styrene being more preferred among these.

In the copolymers of an aromatic vinyl compound and maleic acid and/or maleic anhydride, and derivative thereof, a total content of an aromatic vinyl compound unit (a structural unit derived from an aromatic vinyl compound) and an aromatic vinyl compound derivative unit (a structural unit derived from an aromatic vinyl compound derivative) is preferably 50% by mass or higher, more preferably 60% by mass or higher, still more preferably 700 by mass or higher, while it is preferably 99% by mass or lower, more preferably 95% by mass or lower, still more preferably 90% by mass or lower. When the total content is within the range indicated above, the advantageous effect tends to be better achieved.

Here, the aromatic vinyl compound unit such as a styrene content and the aromatic vinyl compound derivative unit content may be measured by $^1$H-NMR analysis. For example, a styrene content may be determined by measuring a $^1$H-NMR spectrum using a JEOL JNM-A 400 NMR device at 25°C, then using the spectrum to determine a ratio of the phenyl protons of the styrene unit at 6.5 to 7.2 ppm to the vinyl protons of the butadiene unit at 4.9 to 5.4 ppm, and determining the styrene content from the ratio.

In the copolymers of an aromatic vinyl compound and maleic acid and/or maleic anhydride, and derivative thereof, a total content of a unit of at least one compound selected from the group consisting of maleic acid, maleic anhydride, and derivatives thereof and a unit of a derivative of the compound (a structural unit derived from a derivative of the compound) is preferably 1% by mass or higher, more preferably 5% by mass or higher, still more preferably 10% by mass or higher, while it is preferably lower than 50% by mass, more preferably 40% by mass or lower, still more preferably 30% by mass or lower. When the total content is within the range indicated above, the advantageous effect tends to be better achieved.

Here, the content of a unit of at least one compound selected from the group consisting of maleic acid, maleic anhydride, and derivatives thereof and the content of a unit of a derivative of the compound can be measured by $^1$H-NMR analysis.

The polymer having a moiety derived from at least one compound selected from the group consisting of maleic acid, maleic anhydride, and derivatives thereof may be a modified polymer modified with the compound. To better achieve the advantageous effect, a modified liquid polymer modified with the compound is preferably used. It may be used alone or in combinations of two or more.

The liquid polymer (a polymer which is liquid at room temperature (25°C)) constituting the backbone of the modified liquid polymer is desirably a conjugated diene polymer. Desirable examples of the conjugated diene polymer include a liquid diene polymer obtainable by polymerizing mainly a conjugated diene-containing monomer such as 1,3-butadiene, isoprene, 1,3-pentadiene, 2,3-dimethyl-1,3-butadiene, 2-methyl-1,3-pentadiene, 1,3-hexadiene, 2-methyl-1,3-pentadiene, 4,5-diethyl-1,3-octadiene, or 3-buty-1,3-octadiene.

Examples of the liquid diene polymer include liquid polybutadiene, liquid polyisoprene, liquid styrene-butadiene random copolymers, liquid styrene-butadiene block copolymers, liquid butadiene-isoprene random copolymers, liquid butadiene-isoprene block copolymers, liquid styrene-butadiene-isoprene random copolymers, and liquid styrene-butadiene-isoprene block copolymers. These may be used alone or in combinations of two or more. To better achieve the advantageous effect, preferred among these is liquid polyisoprene (i.e., a modified liquid polyisoprene modified with the compound as a polymer having a moiety derived from at least one compound selected from the group consisting of maleic acid, maleic anhydride, and derivatives thereof).

In view of the mechanical properties of the rubber composition, the number average molecular weight (Mn) of the liquid polymer constituting the backbone of the modified liquid polymer is preferably 1000 or more, more preferably 5000 or more, still more preferably 10000 or more. In view of processability, the Mn is preferably 70000 or less, more preferably 50000 or less, still more preferably 34000 or less.

In view of the mechanical properties of the rubber composition, the number average molecular weight (Mn) of the modified liquid polymer is preferably 1000 or more, more preferably 5000 or more, still more preferably 10000 or more. In view of processability, the Mn is preferably 70000 or less, more preferably 50000 or less, still more preferably 34000 or less.

Herein, Mw and Mn can be measured by gel permeation chromatography (GPC) (GPC-8000 series available from Tosoh Corporation, detector: differential refractometer, column: TSKgel SuperMultipore HZ-M available from Tosoh Corporation) and calibrated with polystyrene standards.

The modified liquid polymer modified with at least one compound selected from the group consisting of maleic acid, maleic anhydride, and derivatives thereof can be produced by modifying a material unmodified liquid polymer with the compound. The modification may be performed by any method including a known method, such as adding the compound to a material unmodified liquid polymer.

The liquid polymer may be a product available from Kraray, Clay Valley, etc.

The amount of the polymer having a moiety derived from at least one compound selected from the group consisting of maleic acid, maleic anhydride, and derivatives thereof per 100 parts by mass of the rubber component content is preferably 0.3 parts by mass or more, more preferably 1.5 parts by mass or more, still more preferably 2.4 parts by mass or more, particularly preferably 2.9 parts by mass or more. The amount is preferably 50 parts by mass or less, more preferably 30 parts by mass or less, still more preferably 15 parts by mass or less. When the amount is within the range indicated above, the advantageous effect tends to be better achieved.

The amount is preferably 1 part by mass or more, more preferably 5 parts by mass or more, still more preferably 8 parts by mass or more, particularly preferably 10 parts by mass or more. The amount is preferably 50 parts by mass or less, more preferably 40 parts by mass or less, still more preferably 30 parts by mass or less. When the amount is within the range indicated above, the advantageous effect tends to be better achieved. Here, the amount of a copolymer of an aromatic vinyl compound and maleic acid and/or maleic anhydride, the amount of a derivative of a copolymer of an aromatic vinyl compound and maleic acid and/or maleic anhydride, the amount of a modified polymer modified with at least one compound selected from the group consisting of maleic acid, maleic anhydride, and derivatives thereof, and the amount of a liquid polymer modified with the compound are also preferably within the range indicated above.

(Filler)

The rubber composition contains a filler.

In the first aspect of the present invention, the term "filler" conceptually does not include the above-described "organic fibers".

The amount of fillers per 100 parts by mass of the rubber component content in the rubber composition is preferably 10 parts by mass or more, more preferably 20 parts by mass or more, still more preferably 30 parts by mass or more. The upper limit of the amount is preferably 100 parts by mass or less, more preferably 85 parts by mass or less, still more preferably 70 parts by mass or less, further preferably 55 parts by mass or less, particularly preferably 50 parts by mass or less. When the amount is within the range indicated above, the advantageous effect tends to be better achieved.

The filler may be a known material in the rubber field. Examples include inorganic fillers such as silica, carbon black, calcium carbonate, talc, alumina, clay, aluminum hydroxide, aluminum oxide, and mica; and bio char. To better achieve the advantageous effect, carbon black or silica is preferred, with carbon black being more preferred among these.

Any carbon black may be used, and examples include N134, N110, N220, N234, N219, N339, N330, N326, N351, N550, and N762. Examples of commercial products include those available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. In addition to the above-described carbon black made from mineral oils or the like, carbon black

made from biomass materials such as lignin is also usable. These may be used alone or in combinations of two or more.

The nitrogen adsorption specific surface area ($N_2SA$) of the carbon black is preferably 30 $m^2/g$ or more, more preferably 35 $m^2/g$ or more, still more preferably 40 $m^2/g$ or more, further preferably 42 $m^2/g$ or more. The $N_2SA$ is preferably 100 $m^2/g$ or less, more preferably 80 $m^2/g$ or less, still more preferably 60 $m^2/g$ or less, particularly preferably 50 $m^2/g$ or less. When the $N_2SA$ is within the range indicated above, the advantageous effect tends to be better achieved.

Here, the nitrogen adsorption specific surface area of the carbon black can be determined in accordance with JIS K 6217-2:2001.

The amount of the carbon black per 100 parts by mass of the rubber component content in the rubber composition is preferably 5 parts by mass or more, more preferably 10 parts by mass or more, still more preferably 20 parts by mass or more, further preferably 30 parts by mass or more. The upper limit of the amount is preferably 70 parts by mass or less, more preferably 55 parts by mass or less, still more preferably 40 parts by mass or less. When the amount is within the range indicated above, the advantageous effect tends to be better achieved.

Examples of silica include dry silica (anhydrous silica) and wet silica (hydrous silica). Wet silica is preferred among these because it contains a large number of silanol groups. Examples of commercial products include those available from Degussa, Rhodia, Tosoh Silica Corporation, Solvay Japan, Tokuyama Corporation, etc. Silica made from biomass materials such as rice husks is also usable. These may be used alone or in combinations of two or more.

The nitrogen adsorption specific surface area ($N_2SA$) of the silica is preferably 50 $m^2/g$ or more, more preferably 100 $m^2/g$ or more, still more preferably 150 $m^2/g$ or more, further preferably 170 $m^2/g$ or more, further preferably 175 $m^2/g$ or more. The upper limit of the $N_2SA$ of the silica is not limited, and it is preferably 350 $m^2/g$ or less, more preferably 300 $m^2/g$ or less, still more preferably 250 $m^2/g$ or less. When the $N_2SA$ is within the range indicated above, the advantageous effect tends to be better achieved.

Here, the $N_2SA$ of the silica is measured by a BET method in accordance with ASTM D3037-93.

The average particle size of the silica is preferably 24 nm or less, more preferably 20 nm or less, still more preferably 18 nm or less, while it is preferably 6 nm or more, more preferably 9 nm or more, still more preferably 12 or more. When the average particle size is within the range indicated above, the advantageous effect tends to be better achieved.

Herein, the average particle size of the silica is determined by transmission electron microscopy (TEM). Specifically, silica particles are photographed using a transmission electron microscope. When a particle has a spherical shape, the particle size is the spherical diameter. When a particle has an acicular or rod shape, the particle size is the minor axis. When a particle has an amorphous shape, the particle size is an average of the particle diameters through the center. An average of the particle sizes of 100 fine particles is calculated and defined as the average particle size.

When the rubber composition contains a silica, the amount of the silica per 100 parts by mass of the rubber component content is preferably 10 parts by mass or more, more preferably 30 parts by mass or more, still more preferably 50 parts by mass or more. The upper limit of the amount is preferably 120 parts by mass or less, more preferably 100 parts by mass or less, still more preferably 80 parts by mass or less. When the amount is within the range indicated above, the advantageous effect tends to be better achieved.

(Silane coupling agent)

The rubber composition which contains a silica preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Examples of commercial products include those available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica content in the rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass

or less, more preferably 20 parts by mass or less, still more preferably 15 parts by mass or less, particularly preferably 10 parts by mass or less. When the amount is within the range indicated above, the advantageous effect tends to be better achieved.

(Rubber component)

The rubber composition contains one or more rubber components.

The weight average molecular weight of the rubber components is preferably 50000 or more, more preferably 150000 or more, still more preferably 200000 or more, while it is preferably 2000000 or less, more preferably 1500000 or less, still more preferably 1000000 or less. When the weight average molecular weight is within the range indicated above, the advantageous effect tends to be better achieved.

Herein, the weight average molecular weight (Mw) can be measured by gel permeation chromatography (GPC) (GPC-8000 series available from Tosoh Corporation, detector: differential refractometer, column: TSKgel SuperMultipore HZ-M available from Tosoh Corporation) and calibrated with polystyrene standards.

The rubber components are not limited, and rubber components known in the tire field may be used. Examples include diene-based rubbers such as isoprene-based rubbers, polybutadiene rubbers (BR), styrene-butadiene rubbers (SBR), acrylonitrile-butadiene rubbers (NBR), chloroprene rubbers (CR), butyl rubbers (IIR), and styrene-isoprene-butadiene copolymer rubbers (SIBR). Each of these rubber components may be used alone, or two or more of these may be used in combination. To better achieve the advantageous effect, at least one of isoprene-based rubbers, BR, and SBR is preferably used, and isoprene-based rubbers are more preferably used among these.

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used, including for example those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

The amount of isoprene-based rubbers based on 100% by mass of the rubber component content in the rubber composition is preferably 5% by mass or more, more preferably 50% by mass or more, still more preferably 700 by mass or more, further preferably 80% by mass or more, particularly preferably 90% by mass or more, and may be 100% by mass. When the amount is within the range indicated above, the advantageous effect tends to be better achieved.

Any BR may be used, and examples include those commonly used in the tire industry, including: high-cis BR such as BR1220 available from Zeon Corporation, BR150B available from Ube Industries, Ltd., and BR1280 available from LG Chem; BR containing 1,2-syndiotactic polybutadiene crystals (SPB) such as VCR412 and VCR617 both available from Ube Industries, Ltd.; and polybutadiene rubbers synthesized using rare earth catalysts (rare earthcatalyzed BR). These may be used alone or in combinations of two or more.

The cis content of the BR is preferably 80% by mass or higher, more preferably 85% by mass or higher, still more preferably 90% by mass or higher, while it is preferably 99% by mass or lower, more preferably 98% by mass or lower, still more preferably 97% by mass or lower. When the cis content is within the range indicated above, the advantageous effect tends to be better achieved.

Here, the cis content of the BR can be measured by infrared absorption spectrometry.

When the rubber composition contains BR, the amount of the BR based on 100% by mass of the rubber component content is preferably 5% by mass or more, more preferably 10% by mass or more, still more preferably 15% by mass or more, while it is preferably 50% by mass or less, more preferably 40% by mass or less, still more preferably 300 by mass or less. When the amount is within the range indicated above, the advantageous effect tends to be better achieved.

Any SBR may be used, and examples include emulsionpolymerized styrene-butadiene rubbers (E-SBR) and solutionpolymerized styrene-butadiene rubbers (S-SBR). Examples of commercial products include those available from Sumitomo Chemical Co., Ltd., JSR Corporation, Asahi Kasei Corporation, Zeon Corporation, etc.

The styrene content of the SBR is preferably 5% by mass or higher, more preferably 10% by mass or higher, still more preferably 15% by mass or higher, particularly preferably 20% by mass or higher. The styrene content is preferably 50% by mass or lower, more preferably 45% by mass or lower, still more preferably 40% by mass or lower. When the styrene content is within the range indicated above, the advantageous effect tends to be better achieved.

Herein, the styrene content of the SBR can be determined by $^{1}$H-NMR analysis.

The vinyl content of the SBR is preferably 10% by mass or higher, more preferably 20% by mass or higher, still more preferably 30% by mass or higher. The vinyl content is preferably 90% by mass or lower, more preferably 80% by mass or lower, still more preferably 70% by mass or lower. When the vinyl content is within the range indicated above,

the advantageous effect tends to be better achieved.

Herein, the vinyl content (1,2-butadiene unit content) of the SBR can be measured by infrared absorption spectrometry.

When the rubber composition contains SBR, the amount of the SBR based on 100% by mass of the rubber component content is preferably 5% by mass or more, more preferably 10% by mass or more, still more preferably 15% by mass or more, while it is preferably 50% by mass or less, more preferably 40% by mass or less, still more preferably 300 by mass or less. When the amount is within the range indicated above, the advantageous effect tends to be better achieved.

The rubber components may include extended rubbers which have been extended by plasticizer components such as oils, resins, and liquid rubbers. These may be used alone or in combinations of two or more. Examples of the plasticizers used in the extended rubbers include those as described later. Moreover, the amount of the plasticizers in the extended rubbers is not limited, and it is usually about 10 to 50 parts by mass per 100 parts by mass of the rubber solids content.

The rubber components may be modified to introduce therein a functional group interactive with filler such as silica.

Examples of the functional group include a silicon-containing group ($-SiR_3$ where each R is the same or different and represents a hydrogen atom, a hydroxyl group, a hydrocarbon group, an alkoxy group, or the like), an amino group, an amide group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxy group, a nitrile group, a pyridyl group, an alkoxy group, a hydroxyl group, an oxy group, and an epoxy group, each of which may be substituted. Preferred among these is a silicon-containing group. More preferred is - $SiR_3$ where each R is the same or different and represents a hydrogen atom, a hydroxyl group, a hydrocarbon group (preferably a C1-C6 hydrocarbon group, more preferably a C1-C6 alkyl group), or an alkoxy group (preferably a C1-C6 alkoxy group), and at least one R is a hydroxyl group.

Specific examples of the compound (modifier) used to introduce the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

(Plasticizer)

The rubber composition may contain a plasticizer.

Here, the term "plasticizer" refers to a material that imparts plasticity to rubber components. Examples include liquid plasticizers (plasticizers which are liquid at room temperature (25°C)) and resins (resins which are solid at room temperature (25°C)). In the first aspect of the present invention, the term "plasticizer" conceptually does not include the "liquid modified polymer modified with at least one compound selected from the group consisting of maleic acid, maleic anhydride, and derivatives thereof".

The amount of plasticizers (total amount of plasticizers) per 100 parts by mass of the rubber component content in the rubber composition is preferably 5 parts by mass or more, more preferably 8 parts by mass or more, still more preferably 10 parts by mass or more, while it is preferably 50 parts by mass or less, more preferably 30 parts by mass or less, still more preferably 20 parts by mass or less. When the amount is within the range indicated above, the advantageous effect tends to be better achieved. Here, the amount of plasticizers includes the amount of the plasticizer components used in the extended rubbers.

Any liquid plasticizer (plasticizer which is liquid at room temperature (25°C)) may be used. Examples include oils and liquid polymers (liquid resins, liquid diene polymers, liquid farnesene polymers, etc.). These may be used alone or in combinations of two or more.

The amount of liquid plasticizers per 100 parts by mass of the rubber component content in the rubber composition is 5 parts by mass or more, more preferably 8 parts by mass or more, still more preferably 10 parts by mass or more, while it is preferably 50 parts by mass or less, more preferably 30 parts by mass or less, still more preferably 20 parts by mass or less. When the amount is within the range indicated above, the advantageous effect tends to be better achieved. Here, the amount of liquid plasticizers includes the amount of the oils contained in the oil extended rubbers. The amount of oils is also preferably within the range indicated above.

Examples of oils include process oils, plant oils, and mixtures thereof. Examples of process oils include paraffinic process oils, aromatic process oils, and naphthenic process oils. Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Examples of commercial products include those available from Idemitsu Kosan Co., Ltd., Sankyo Yuka Kogyo K.K.,

Japan Energy, Olisoy, H&R, Hokoku Corporation, Showa Shell Sekiyu K.K., Fuji Kosan Co., Ltd., The Nisshin Oillio Group., Ltd., etc. Process oils, such as paraffinic process oils, aromatic process oils, and naphthenic process oils, or plant oils are preferred, with plant oils being more preferred among these. In view of life cycle assessment, oils after being used as lubricating oils in mixers for mixing rubber, engines, or other applications, waste cooking oils, or the like may appropriately be used as the process oils or plant oils.

Examples of liquid resins include terpene resins (including terpene phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of these resins are also usable.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers), all of which are liquid at 25°C. The chain end or backbone of these polymers may be modified with a polar group. Hydrogenated products of these polymers are also usable.

Examples of liquid farnesene polymers include liquid farnesene polymers and liquid farnesene-butadiene copolymers, all of which are liquid at 25°C. The chain end or backbone of these polymers may be modified with a polar group. Hydrogenated products of these polymers are also usable.

Examples of the resins (resins which are solid at room temperature (25°C)) include aromatic vinyl polymers, coumarone-indene resins, coumarone resins, indene resins, phenol resins, rosin resins, petroleum resins, terpene resins, and acrylic resins, all of which are solid at room temperature (25°C). The resins may be hydrogenated. These may be used alone or in combinations of two or more. Aromatic vinyl polymers, petroleum resins, and terpene resins are preferred among these.

The amount of resins per 100 parts by mass of the rubber component content in the rubber composition is preferably 5 parts by mass or more, more preferably 8 parts by mass or more, still more preferably 10 parts by mass or more, while it is preferably 50 parts by mass or less, more preferably 30 parts by mass or less, still more preferably 20 parts by mass or less. When the amount is within the range indicated above, the advantageous effect tends to be better achieved.

The softening point of the resins is preferably 50°C or higher, more preferably 55°C or higher, still more preferably 60°C or higher. The upper limit is preferably 160°C or lower, more preferably 150°C or lower, still more preferably 145°C or lower. When the softening point is within the range indicated above, the advantageous effect tends to be better achieved.

The softening point of the resins is determined in accordance with in JIS K 6220-1:2001 using a ring and ball softening point measuring apparatus, and the temperature at which the ball drops down is defined as the softening point.

Here, the softening points of the resins are usually within about 50°C ± 5°C of the glass transition temperatures of the respective resin components.

The aromatic vinyl polymers refer to polymers containing aromatic vinyl monomers as structure units. Examples include resins produced by polymerizing α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the backbone (main chain) of the resins. Examples of monomer components which may be contained in the backbone in addition to coumarone and indene include styrene, α-methylstyrene, methylindene, and vinyltoluene.

The coumarone resins refer to resins containing coumarone as the main monomer component forming the backbone (main chain) of the resins.

The indene resins refer to resins containing indene as the main monomer component forming the backbone (main chain) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of these resins. DCPD resins or hydrogenated DCPD resins are preferred among these.

The terpene resins refer to polymers containing terpenes as structural units. Examples include polyterpene resins produced by polymerizing terpene compounds, and aromatic modified terpene resins produced by polymerizing terpene compounds and aromatic compounds. Examples of such aromatic modified terpene resins include terpene phenol resins made from terpene compounds and phenolic compounds, terpene styrene resins made from terpene compounds and styrene compounds, and terpene phenol styrene resins made from terpene compounds, phenolic compounds, and styrene compounds. Examples of the terpene compounds include α-pinene and β-pinene. Examples

of the phenolic compounds include phenol and bisphenol A. Examples of the aromatic compounds include styrene compounds such as styrene and α-methylstyrene.

The acrylic resins refer to polymers containing acrylic monomers as structure units. Examples include styrene acrylic resins, such as those which contain carboxy groups and are produced by copolymerizing aromatic vinyl monomer components and acrylic monomer components. Solvent-free, carboxy group-containing styrene acrylic resins are suitable among these.

Examples of commercial plasticizers include those available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

(Other components)

The rubber composition may contain an antioxidant.

Examples of antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Examples of commercial products include those available from Seiko Chemical Co., Ltd., Sumitomo Chemical Co., Ltd., Ouchi Shinko Chemical Industrial Co., Ltd., Flexsys, etc. These may be used alone or in combinations of two or more.

The amount of antioxidants per 100 parts by mass of the rubber component content in the rubber composition is preferably 1 part by mass or more, more preferably 2 parts by mass or more, still more preferably 3 parts by mass or more, while it is preferably 10 parts by mass or less, more preferably 6 parts by mass or less, still more preferably 5 parts by mass or less. When the amount is within the range indicated above, the advantageous effect tends to be better achieved.

The rubber composition may contain a wax.

Any wax may be used, and examples include petroleum waxes such as paraffin waxes and microcrystalline waxes; naturally-occurring waxes such as plant waxes and animal waxes; and synthetic waxes such as polymerized ethylene, propylene, or other similar monomers. Examples of commercial products include those available from Ouchi Shinko Chemical Industrial Co., Ltd., Nippon Seiro Co., Ltd., Seiko Chemical Co., Ltd., etc. These may be used alone or in combinations of two or more.

The amount of waxes per 100 parts by mass of the rubber component content in the rubber composition is preferably 1 part by mass or more, more preferably 2 parts by mass or more, while it is preferably 10 parts by mass or less, more preferably 6 parts by mass or less. When the amount is within the range indicated above, the advantageous effect tends to be better achieved.

The rubber composition may contain stearic acid.

Conventionally known stearic acid may be used. Examples of commercial products include those available from NOF Corporation, Kao Corporation, Fujifilm Wako Pure Chemical Corporation, Chiba Fatty Acid Co., Ltd., etc. These may be used alone or in combinations of two or more.

The amount of stearic acid per 100 parts by mass of the rubber component content in the rubber composition is preferably 1 part by mass or more, more preferably 2 parts by mass or more, while it is preferably 10 parts by mass or less, more preferably 6 parts by mass or less. When the amount is within the range indicated above, the advantageous effect tends to be better achieved.

The rubber composition may contain sulfur.

Examples of sulfur include those commonly used as crosslinking agents in the rubber industry, such as powdered sulfur, precipitated sulfur, colloidal sulfur, insoluble sulfur, highly dispersible sulfur, and soluble sulfur. Examples of commercial products include those available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The amount of sulfur per 100 parts by mass of the rubber component content in the rubber composition is preferably 0.5 parts by mass or more, more preferably 1.0 parts by mass or more, still more preferably 1.5 parts by mass or more, while it is preferably 3.5 parts by mass or less, more preferably 2.8 parts by mass or less, still more preferably 2.5 parts by mass or less. When the amount is within the range indicated above, the advantageous effect tends to be better achieved.

The rubber composition may contain a vulcanization accelerator.

Examples of vulcanization accelerators include benzothiazole vulcanization accelerators such as 2-mercaptobenzothiazole and di-2-benzothiazolyl disulfide; thiuram vulcanization accelerators such as tetramethylthiuram disulfide (TMTD) and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Examples of commercial products include those available from Sumitomo Chemical Co., Ltd., Ouchi Shinko Chemical Industrial Co., Ltd., etc. These may be used alone or in combinations of two or more.

The amount of vulcanization accelerators per 100 parts by mass of the rubber component content in the rubber composition is preferably 0.5 parts by mass or more, more preferably 0.8 parts by mass or more, still more preferably 1.0 parts by mass or more, while it is preferably 10 parts by mass or less, more preferably 8 parts by mass or less, still more preferably 7 parts by mass or less. When the amount is within the range indicated above, the advantageous effect tends to be better achieved.

In addition to the above-described components, the rubber composition may further contain additives commonly used in the tire industry, such as zinc oxide and organic peroxides. The amounts of these additives are each preferably 0.1 to 200 parts by mass per 100 parts by mass of the rubber component content.

The rubber composition may be prepared by known methods. For example, it may be prepared by kneading the components using a rubber kneading machine such as an open roll mill or a Banbury mixer, and then vulcanizing the kneaded mixture.

To better achieve the advantageous effect, the rubber composition is desirably produced by a production method including: a step (step 1) of mixing the organic fibers with the polymer having a moiety derived from at least one compound selected from the group consisting of maleic acid, maleic anhydride, and derivatives thereof to prepare a mixture; a step (step 2) of mixing the mixture with a rubber latex to prepare a compounded latex; and a step (step 3) of coagulating the compounded latex. The production method including the steps may further include other steps. The steps may each be performed once or repeated multiple times.

In step 1, examples of the method to mix the organic fibers with the polymer having a moiety derived from at least one compound selected from the group consisting of maleic acid, maleic anhydride, and derivatives thereof to prepare a mixture include mixing a dispersion of the organic fibers with the polymer using a known stirring device such as a high-speed homogenizer, an ultrasonic homogenizer, a colloid mill, or a blender mill. The temperature and the time to prepare the mixture may be appropriately set to sufficiently mix the components, for example, preferably at 10°C to 40°C for 3 to 120 minutes, more preferably at 15°C to 30°C for 5 to 90 minutes.

The dispersion of the organic fibers may be prepared by known methods. For example, it may be prepared by dispersing the organic fibers in water using a mixer such as a high-pressure homogenizer, an ultrasonic homogenizer, or a colloid mill. The temperature and time for the preparation may be appropriately set in view of the dispersion state. The amount (solids content) of the organic fibers in the dispersion is not limited. For uniform dispersion, the amount is 0.1 to 20% by mass, preferably 0.2 to 10% by mass, more preferably 0.3 to 5% by mass of the dispersion (100% by mass).

Step 2 is a step of mixing the mixture of the organic fibers with the polymer obtained in step 1 with a rubber latex to prepare a compounded latex. Suitable examples of usable rubber latex include diene rubber latexes such as natural rubber latex and synthetic diene rubber latexes (e.g., latexes of polybutadiene rubber (BR), styrene-butadiene rubber (SBR), styrene-isoprene-butadiene rubber (SIBR), polyisoprene rubber, acrylonitrile-butadiene rubber, ethylene-vinyl acetate rubber, chloroprene rubber, vinylpyridine rubber, or butyl rubber). These rubber latexes may be used alone or in combinations of two or more. Natural rubber latex, SBR latex, BR latex, and polyisoprene rubber latex are more preferred among these, with natural rubber latex being further preferred.

The pH of the rubber latex is preferably 8.5 or higher, more preferably 9.5 or higher. A rubber latex having a pH lower than 8.5 tends to be unstable and easily coagulate. The pH of the rubber latex is preferably 12 or lower, more preferably 11 or lower. A rubber latex having a pH higher than 12 may be degraded.

The rubber latex may be prepared by conventionally known methods. Alternatively, it may be any commercial product. The rubber latex preferably has a rubber solids content of 10 to 80% by mass, more preferably 20 to 60% by mass.

The mixing in step 2 includes sufficiently stirring the mixture with a rubber latex into a homogenous dispersion to prepare a compounded latex. Examples of the mixing method include stirring a rubber latex in a known stirring device such as a blender mill while dropwise adding the mixture and stirring the mixture while dropwise adding a rubber latex.

The pH of the produced compounded latex is preferably 9.0 or higher, more preferably 9.5 or higher. A compounded latex having a pH lower than 9.0 tends to be unstable. The pH of the compounded latex is preferably 12 or lower, more preferably 11.5 or lower, still more preferably 10.2 or lower. A compounded latex having a pH higher than 12 may be degraded.

In step 2, in view of the dispersion of the organic fibers, the mixture is mixed with a rubber latex preferably such that the amount of the organic fibers per 100 parts by mass of the rubber solids content of the rubber latex is 1 to 150 parts by mass. The amount of the organic fibers is preferably 5 parts by mass or more, more preferably 10 parts by mass or more, still more preferably 20 parts by mass or more, while it is preferably 100 parts by mass or less, more

preferably 50 parts by mass or less, still more preferably 30 parts by mass or less.

The mixing temperature and mixing time in step 2 are preferably at 10°C to 40°C for 3 to 120 minutes, more preferably at 15°C to 30°C for 5 to 90 minutes to prepare a uniform compounded latex.

Step 3 includes coagulating the compounded latex obtained in step 2. The coagulation may be accomplished, for example, by adjusting the pH of the compounded latex to 3 to 5, preferably 3 to 4. The coagulation of the compounded latex by pH adjustment may usually be carried out by adding an acid to the compounded latex. Examples of the acid for coagulation include sulfuric acid, hydrochloric acid, formic acid, and acetic acid. The coagulation step is preferably performed at 10°C to 40°C.

A flocculant may also be added to control the coagulation (the size of the coagulated particle aggregates). Examples of the flocculant include cationic polymers.

The resulting coagula (aggregates containing the coagulated rubber and nanocellulose) may be filtrated, dried, further dried, and subjected to rubber kneading using a kneading machine such as a two-roll mill or a Banbury mixer by known methods to obtain a composite in which the organic fibers are uniformly dispersed in the rubber matrix.

The composite may contain other components as long as the advantageous effect is not impaired. To better achieve the advantageous effect, the composite preferably contains the plasticizer, more preferably a liquid plasticizer, still more preferably an oil.

The composite containing the plasticizer may be prepared by mixing the plasticizer in at least any of step 1 and step 2. In this case, the plasticizer is mixed desirably such that the amount of the plasticizer per 100 parts by mass of the rubber solids content of the rubber latex is 1 to 100 parts by mass. The amount of the plasticizer is preferably 5 parts by mass or more, more preferably 10 parts by mass or more, while it is preferably 50 parts by mass or less, more preferably 40 parts by mass or less, still more preferably 30 parts by mass or less. The plasticizer is desirably added in step 1. The amount of the liquid plasticizer and the amount of the oil are also preferably within the range indicated above.

The composite can be used as a masterbatch. For example, the rubber composition can be produced by a known method, for example, by kneading the composite and other materials in a rubber kneading machine such as an open roll mill or a Banbury mixier and vulcanizing the kneaded mixture.

The kneading conditions are as follows. In a base kneading step of kneading additives other than vulcanizing agents and vulcanization accelerators, the kneading temperature is usually 50°C to 200°C, preferably 80°C to 190°C, and the kneading time is usually 30 seconds to 30 minutes, preferably one minute to 30 minutes. In a final kneading step of kneading vulcanizing agents and vulcanization accelerators, the kneading temperature is usually 100°C or lower, preferably from room temperature to 80°C. Then, the composition obtained after kneading vulcanizing agents and vulcanization accelerators is usually vulcanized by press vulcanization, for example. The vulcanization temperature is usually 120°C to 200°C, preferably 140°C to 180°C.

The rubber composition is used in a tire component.

In the tire according to the first aspect of the present invention, the tire component including the rubber composition has a complex modulus of elasticity at 30°C (30°C E*a (MPa)) in the tire circumferential direction and a loss tangent at 30°C (30°C tan δa) in the tire circumferential direction which satisfy the following formula:

$$30°C\ E^*a/30°C\ \tan\delta a \geq 33.$$

To further improve overall performance in terms of handling stability during high-speed driving and fuel economy, the ratio "30°C E*a/30°C tan δa" is preferably 35 or higher, more preferably 37 or higher, still more preferably 40 or higher, further preferably 45 or higher, further preferably 47 or higher, particularly preferably 50 or higher, most preferably 55 or higher.

As described above, the tire can better solve the problem (aim) in improving overall performance in terms of handling stability during high-speed driving and fuel economy by including a tire component that satisfies the formula: 30°C E*a/30°C tan δa ≥ 33. In other words, the formula does not define the problem (aim). The problem herein is to improve overall performance in terms of handling stability during high-speed driving and fuel economy. In order to solve the problem, the tire has been formulated to satisfy the parameter.

To better achieve the advantageous effect, the tire component including the rubber composition has a complex modulus of elasticity at 30°C (30°C E*a (MPa)) in the tire circumferential direction and a loss tangent at 30°C (30°C tan δa) in the tire circumferential direction which desirably satisfy the following formula:

$$30°C\ E^*a/30°C\ \tan\delta a \leq 75.$$

The ratio "30°C E*a/30°C tan δa" is preferably 72 or lower, more preferably 70 or lower, still more preferably 67 or lower, further preferably 65 or lower, particularly preferably 60 or lower.

In the tire according to the first aspect of the present invention, when the tire component including the rubber composition satisfies the formula, overall performance in terms of handling stability during high-speed driving and fuel economy tends to be further improved.

The mechanism for the advantageous effect is not clear, but it is believed that, as described above, the stiffness in the tire circumferential direction is improved by controlling the 30°C E*a in the tire circumferential direction to be high, while rolling resistance is reduced by controlling the 30°C tan δa in the tire circumferential direction to be low, and moreover, controlling the ratio 30°C E*a/30°C tan δa to be a predetermined value or lower ensures the balance between handling stability during high-speed driving and fuel economy.

To better achieve the advantageous effect, the tire component including the rubber composition has a loss tangent at 30°C (30°C tan δa) in the tire circumferential direction and a loss tangent at 30°C (30°C tan δb) in the tire radial direction which desirably satisfy the following formula:

$$30°C \tan \delta a / 30°C \tan \delta b \geq 1.00.$$

The ratio "30°C tan δa/30°C tan δb" is preferably 1.01 or higher, more preferably 1.02 or higher, still more preferably 1.03 or higher, further preferably 1.04 or higher, further preferably 1.05 or higher, further preferably 1.06 or higher. The upper limit is not limited, and it is preferably 1.20 or lower, more preferably 1.15 or lower, still more preferably 1.08 or lower, further preferably 1.07 or lower.

In the tire according to the first aspect of the present invention, when the tire component including the rubber composition satisfies the formula, overall performance in terms of handling stability during high-speed driving and fuel economy is further improved.

The mechanism for the advantageous effect is not clear, but it is believed that the 30°C tan δa in the tire circumferential direction controlled to be low reduces rolling resistance to suppress heat generation. Thus, overall performance in terms of handling stability during high-speed driving and fuel economy is presumably improved.

To better achieve the advantageous effect, the tire component including the rubber composition has a complex modulus of elasticity at 30°C (30°C E*a (MPa)) in the tire circumferential direction which desirably satisfies the following formula:

$$30°C\ E^*a \geq 5.0\ MPa.$$

The 30°C E*a is preferably 5.2 MPa or more, more preferably 5.7 MPa or more, still more preferably 9.0 MPa or more, further preferably 9.7 MPa or more, further preferably 9.9 MPa or more, particularly preferably 10.7 MPa or more. The upper limit is not limited, and it is preferably 20.0 MPa or less, more preferably 16.0 MPa or less, still more preferably 15.0 MPa or less, further preferably 14.0 MPa or less, further preferably 13.0 MPa or less.

In the tire according to the first aspect of the present invention, when the tire component including the rubber composition satisfies the formula, overall performance in terms of handling stability during high-speed driving and fuel economy is further improved.

The mechanism for the advantageous effect is not clear, but it is believed that the 30°C E*a in the tire circumferential direction controlled to be high improves the stiffness in the tire circumferential direction. Thus, overall performance in terms of handling stability during high-speed driving and fuel economy is presumably improved.

To better achieve the advantageous effect, the tire component including the rubber composition has a loss tangent at 30°C (30°C tan δa) in the tire circumferential direction which desirably satisfies the following formula: 30°C tan δa ≥ 0.120.

The 30°C tan δa is preferably 0.137 or more, more preferably 0.140 or more, still more preferably 0.144 or more, further preferably 0.150 or more, further preferably 0.160 or more, further preferably 0.180 or more, further preferably 0.190 or more, further preferably 0.194 or more. The upper limit is not limited, and it is preferably 0.500 or less, more preferably 0.400 or less, still more preferably 0.300 or less, further preferably 0.260 or less, further preferably 0.240 or less, further preferably 0.210 or less, further preferably 0.205 or less.

In the tire according to the first aspect of the present invention, when the tire component including the rubber composition satisfies the formula, overall performance in terms of handling stability during high-speed driving and fuel economy is further improved.

The mechanism for the advantageous effect is not clear, but it is believed that 30°C tan δa in the tire circumferential direction controlled to be low suppresses heat generation. Thus, overall performance in terms of handling stability during high-speed driving and fuel economy is presumably improved.

As described above, the tire better solves the problem (aim) in improving overall performance in terms of handling stability during high-speed driving and fuel economy by including a tire component that satisfies the formula: 30°C E*a/30°C tan $\delta$a $\geq$ 33, and additionally satisfies at least one of the formula: 30°C E*a/30°C tan $\delta$a $\geq$ 45, the formula: 30°C E*a/30°C tan $\delta$a $\leq$ 72, the formula: 30°C E*a/30°C tan $\delta$a $\leq$ 65, the formula: 30°C E*a $\geq$ 5.0 MPa, and the formula: 30°C tan $\delta$a $\geq$ 0.120. In other words, these formulas do not define the problem (aim). The problem herein is to improve overall performance in terms of handling stability during high-speed driving and fuel economy. In order to solve the problem, the tire desirably has been formulated to satisfy the parameters.

Herein, the "30°C E*a" and the "30°C tan $\delta$" are a complex modulus of elasticity and a loss tangent, respectively, measured at a temperature of 30°C, an initial strain of 50, a dynamic strain of 1%, a frequency of 10 Hz, and elongation mode. The "30°C E*a" and "30°C tan $\delta$" of the tire component including the rubber composition refer to the E*a at 30°C and tan $\delta$ at 30°C, respectively, of the vulcanized rubber composition (tire component). They are values obtained by viscoelastic testing of the vulcanized rubber composition (tire component).

The 30°C tan $\delta$ can be controlled by varying the types or amounts of chemicals (in particular, organic fibers, polymers having a moiety derived from at least one compound selected from the group consisting of maleic acid, maleic anhydride, and derivatives thereof, fillers, rubber components, plasticizers such as oils and resins, sulfur, vulcanization accelerators, silane coupling agents) compounded in the rubber composition. Specifically, the 30°C tan $\delta$ tends to be increased by using the organic fibers, the polymer, or a mixture (masterbatch) of any of the foregoing components with a rubber component; increasing the amount of fillers; increasing the amount of oils; reducing the amount of sulfur; reducing the amount of vulcanization accelerators; or reducing the amount of silane coupling agents.

The 30°C E*a can be controlled by varying the types or amounts of chemicals (in particular, organic fibers, polymers having a moiety derived from at least one compound selected from the group consisting of maleic acid, maleic anhydride, and derivatives thereof, fillers, rubber components, plasticizers such as oils and resins) compounded in the rubber composition. Specifically, the 30°C E*a tends to be increased by using the organic fibers, the polymer, or a mixture (masterbatch) of any of the foregoing components with a rubber component; reducing the amount of softeners; increasing the amount of fillers; increasing the amount of sulfur; or increasing the amount of vulcanization accelerators.

As described above, for example, the tire component including the rubber composition has a loss tangent at 30°C (30°C tan $\delta$a) in the tire circumferential direction and a loss tangent at 30°C (30°C tan $\delta$b) in the tire radial direction which desirably satisfy "30°C tan $\delta$a/30°C tan $\delta$b $\geq$ 1.00". In other words, the tire according to the first aspect of the present invention desirably includes a tire component in which the physical properties in the tire circumferential direction are different from those in the tire radial direction. A tire with anisotropic physical properties can be produced by, for example, preparing a tire component by extruding a rubber composition containing the components such that the organic fibers are oriented in the extrusion direction, and then using the tire component in a tire.

In the first aspect of the present invention, the term "tire circumferential direction" refers to the rotational direction of the tire, while the term "tire radial direction" refers to a direction perpendicular to the tire circumferential direction.

To better achieve the advantageous effect, the tire component including the rubber composition has a filler content Fc (parts by mass) per 100 parts by mass of a rubber component content and a complex modulus of elasticity at 30°C (30°C E*a (MPa)) in the tire circumferential direction which desirably satisfy the following formula:

$$\text{Fc}/30^\circ\text{C E*a} \leq 6.00.$$

The ratio "Fc/30°C E*a" is preferably 5.77 or lower, more preferably 5.31 or lower, still more preferably 5.27 or lower, further preferably 5.20 or lower, further preferably 4.25 or lower, further preferably 3.10 or lower, further preferably 3.03 or lower, particularly preferably 2.82 or lower. The lower limit is not limited, and it is preferably 1.50 or higher, more preferably 1.80 or higher, still more preferably 2.00 or higher, particularly preferably 2.20 or higher.

Non-limiting examples of the tire component include tire components such as treads (cap tread), sidewalls, base treads, beat apexes, clinch apexes, innerliners, undertreads, breaker toppings, and ply toppings. To better achieve the advantageous effect, the tire component is preferably a sidewall or a tread, more preferably a sidewall.

The tire including the tire component is produced using the rubber composition by a usual method. For example, an unvulcanized rubber composition containing the composite and other materials is extruded into the shape of the tire component and then molded together with other tire components on a tire building machine by a usual method to form an unvulcanized tire. Next, the unvulcanized tire is heated and pressurized in a vulcanizer. Accordingly, the tire can be produced.

Examples of the tire include pneumatic tires and nonpneumatic tires. The tire is preferably a pneumatic tire among these. For example, the tire can be suitably used as a summer tire or a winter tire (studless tire, snow tire, studded

tire, etc.). The tire can be used for passenger cars, large passenger cars, large SUVs, heavy-duty vehicles such as trucks and buses, light trucks, or motorcycles, or as a racing tire (high performance tire), etc.

(Second aspect of the present invention)

Next, the second aspect of the present invention is described below.

The second aspect of the present invention relates to a masterbatch, containing: a microfibrillated cellulose having an average fiber diameter of 10 μm or less; and a diene polymer having a moiety derived from at least one compound selected from the group consisting of carboxylic acid and carboxylic anhydride, the microfibrillated cellulose having an average fiber diameter A (μm) and the diene polymer having a number average molecular weight B, the A and the B satisfying the following formula:

$$(A \times B)/1000 \leq 350.$$

A rubber composition containing the masterbatch can improve overall performance in terms of reinforcement (tensile strength at break, elastic modulus) and fuel economy.

The mechanism for the advantageous effect is not clear, but it is believed to be as follows.

Compounding the diene polymer having a moiety derived from at least one compound selected from the group consisting of carboxylic acid and carboxylic anhydride causes the interaction between the moiety derived from at least one compound selected from the group consisting of carboxylic acid and carboxylic anhydride in the diene polymer and the microfibrillated cellulose (for example, OH groups of the microfibrillated cellulose), so that the microfibrillated cellulose binds via ester bonds to the at least one compound selected from the group consisting of carboxylic acid and carboxylic anhydride. This allows the microfibrillated cellulose, even if it is a fine microfibrillated cellulose having an average fiber diameter of 10 um or less, to better disperse in the rubber, thereby improving reinforcement. Moreover, the rubber strongly binds to the microfibrillated cellulose to have a higher elasticity, thereby suppressing heat generation.

In addition, a diene polymer having a molecular weight which is not high is used so that a product of the average fiber diameter of the microfibrillated cellulose and the number average molecular weight of the diene polymer having a moiety derived from at least one compound selected from the group consisting of carboxylic acid and carboxylic anhydride falls within the predetermined range. Thus, the diene polymer and the microfibrillated cellulose can form a composite to suppress aggregation of the microfibrillated cellulose, thereby improving the dispersion. Moreover, the proportion of the carboxylic acid or carboxylic anhydride can be increased to increase the interaction between the microfibrillated cellulose and the rubber. Thus, reinforcement and fuel economy are presumably further improved.

In addition to the above, the mechanism may include the following.

When a diene polymer having a carboxylic acid moiety or a carboxylic anhydride moiety is compounded, the diene compound interacts with the hydroxyl groups of the microfibrillated cellulose. Moreover, the microfibrillated cellulose controlled to have an average fiber diameter of 10 um or less can better disperse in the rubber, thereby facilitating the interaction. In addition, controlling the product of the average fiber diameter of the microfibrillated cellulose and the number average molecular weight of the diene polymer to be within the predetermined range, in other words, using a diene polymer having a molecular weight which is not high, increases the proportion of the carboxylic acid or carboxylic anhydride which can interact with the hydroxyl groups present on the surface of the microfibrillated cellulose. Thus, satisfying the all described above facilitates the interaction between the microfibrillated cellulose and the diene polymer, whereby dispersion of the microfibrillated cellulose in the rubber is considered to be improved.

Accordingly, the second aspect of the present invention can presumably improve overall performance in terms of reinforcement (tensile strength at break, elastic modulus) and fuel economy.

[Masterbatch]

The masterbatch according to the second aspect of the present invention contains a microfibrillated cellulose having an average fiber diameter of 10 um or less and a diene polymer having a moiety derived from at least one compound selected from the group consisting of carboxylic acid and carboxylic anhydride. The microfibrillated cellulose has an average fiber diameter A (um) and the diene polymer has a number average molecular weight B, the A and the B satisfying the following formula:

$$(A \times B)/1000 \leq 350.$$

The masterbatch contains a microfibrillated cellulose having an average fiber diameter of 10 um or less.

The microfibrillated cellulose (cellulose nanofibers (CNF)) refers to fibers which can be prepared by treating plant fibers via, for example, mechanical fibrillation.

Examples of the method to prepare CNF by fibrillating plant fibers include fibrillating a cellulose fiber-containing material such as pulp. The fibrillation may be performed by, for example, mechanically grinding or beating a water suspension or slurry of the cellulose fiber-containing material using a refiner, a high-pressure homogenizer, a grinder, a single or multi-screw kneader (preferably twin screw kneader), a bead mill, or other devices.

The microfibrillated cellulose has an average fiber diameter of 10 μm or less. In view of dispersibility in a rubber matrix and other properties, the average fiber diameter is preferably 500 nm or less, more preferably 100 nm or less, still more preferably 50 nm or less, further preferably 20 nm or less. The lower limit of the average fiber diameter is not limited, and it is preferably 1 nm or more, more preferably 2 nm or more, still more preferably 3 nm or more.

The microfibrillated cellulose has an average fiber length of preferably 100 nm or more, more preferably 300 nm or more, still more preferably 500 nm or more. The upper limit is preferably 50 um or less, more preferably 10 μm or less. When the average fiber length is within the range indicated above, the advantageous effect tends to be better achieved.

The aspect ratio (average fiber length/average fiber diameter) of the microfibrillated cellulose is preferably 10 or higher, more preferably 15 or higher, still more preferably 20 or higher. The upper limit is not limited, and it is preferably 1000 or lower, more preferably 700 or lower, still more preferably 500 or lower. When the aspect ratio is within the range indicated above, the advantageous effect tends to be better achieved.

Herein, the average fiber diameter and average fiber length of the microfibrillated cellulose may be measured by image analysis using scanning electron micrographs, image analysis using transmission electron micrographs, image analysis using atomic force micrographs, X-ray scattering data analysis, the aperture impedance method (Coulter principle), a method using a laser diffraction/scattering particle size distribution analyzer, or other methods.

Herein, the average fiber diameter and average fiber length of the microfibrillated cellulose typically refer to the average fiber diameter and average fiber length, respectively, of the aggregates of the microfibrillated cellulose formed by aggregation of cellulose molecules.

The microfibrillated cellulose usually has a degree of crystallinity of 90% or less, and the degree of crystallinity may be 80% or less or 700 or less. In view of dispersibility in a rubber matrix and other properties, the lower limit of the degree of crystallinity is preferably 300 or more, more preferably 500 or more, still more preferably 60% or more.

Herein, the degree of crystallinity of the microfibrillated cellulose refers to the degree of cellulose I crystallinity calculated from diffraction intensity data obtained by X-ray diffraction in accordance with the Segal's method and is defined by the following equation:

$$\text{Degree of cellulose I crystallinity (\%)} = [(I22.6 - I18.5)/I22.6] \times 100$$

where I22.6 denotes the diffraction intensity of the lattice plane (002) (diffraction angle 2θ = 22.6°), and I18.5 denotes the diffraction intensity of the amorphous portion (diffraction angle 2θ = 18.5°) in X-ray diffraction.

Examples of the raw material (cellulose) of the microfibrillated cellulose include plant-derived celluloses such as softwood kraft pulp, hardwood kraft pulp, Manila hemp pulp, sisal hemp pulp, bamboo pulp, esparto pulp, and cotton pulp; regenerated celluloses such as regenerated celluloses (polynosic rayons) with a high degree of polymerization produced by spinning in a low acid bath, and solvent-spun rayons produced using amine-oxide organic solvents; bacterial celluloses; animal-derived celluloses such as sea squirt-derived cellulose; and nanocelluloses produced by electrospinning.

The microfibrillated cellulose may be produced from a plant-derived cellulose by a physical or chemical method. Examples of the physical (fibrillation) method include a high-pressure homogenizer method, a microfluidizer method, a ball mill method, and a grinding mill method. Examples of the chemical method include a TEMPO oxidation method.

The microfibrillated cellulose may also be, for example, one in which some lignin or hemicellulose remains or one which has a chemically modified surface (modified pulp). For example, the modified pulp may be one in which the hydroxyl groups of cellulose fibers are modified with at least one method selected from esterification or etherification. Moreover, the cross-sectional shape of the microfibrillated cellulose may be either anisotropic (e.g., flat) or isotropic (e.g., perfect circle or regular polygon).

The microfibrillated cellulose content based on 1000 by mass of the masterbatch is preferably 10% by mass or higher, more preferably 15% by mass or higher, still more preferably 20% by mass or higher, further preferably 25% by mass or higher, further preferably 30% by mass or higher. The microfibrillated cellulose content is preferably 60% by mass or lower, more preferably 55% by mass or lower, still more preferably 50% by mass or lower, further preferably

45% by mass or lower, further preferably 40% by mass or lower. When the content is within the range indicated above, the advantageous effect tends to be better achieved.

The microfibrillated cellulose content C (% by mass) based on 100% by mass of the masterbatch and the average fiber diameter A (um) of the microfibrillated cellulose preferably satisfy the following formula. $C/A \geq 3$.

The ratio C/A is more preferably 10 or higher, still more preferably 30 or higher, further preferably 60 or higher, further preferably 100 or higher, further preferably 500 or higher, further preferably 1000 or higher. The ratio C/A is preferably 5000 or lower, more preferably 3000 or lower, still more preferably 2000 or lower, further preferably 1500 or lower. When the ratio is within the range indicated above, the advantageous effect tends to be better achieved.

The mechanism by which the advantageous effect can be better achieved by controlling the C/A within the range indicated above is not clear, but it is believed to be as follows. When a diene polymer having a carboxylic acid moiety or a carboxylic anhydride moiety is compounded, the diene compound interacts with the hydroxyl groups of the microfibrillated cellulose. Moreover, the microfibrillated cellulose controlled to have an average fiber diameter of 10 um or less can better disperse in the rubber, thereby facilitating the interaction. In addition, controlling the average fiber diameter and the microfibrillated cellulose content increases the proportion of the carboxylic acid or carboxylic anhydride which can interact with the hydroxyl groups present on the surface of the microfibrillated cellulose, whereby aggregation of the microfibrillated cellulose in the masterbatch is considered to be suppressed.

Thus, satisfying the all described above facilitates the interaction between the microfibrillated cellulose and the diene polymer, whereby reinforcement and fuel economy are presumably further improved.

The masterbatch contains a diene polymer having a moiety derived from at least one compound selected from the group consisting of carboxylic acid and carboxylic anhydride.

The term "diene polymer having a moiety derived from at least one compound selected from the group consisting of carboxylic acid and carboxylic anhydride" refers to a modified diene polymer modified with at least one compound selected from the group consisting of carboxylic acid and carboxylic anhydride. To better achieve the advantageous effect, a modified liquid diene polymer modified with at least one compound selected from the group consisting of carboxylic acid and carboxylic anhydride is suitably used. These may be used alone or in combinations of two or more.

Examples of the carboxylic acid include maleic acid, fumaric acid, succinic acid, phthalic acid, glutaric acid, itaconic acid, acrylic acid, and methacrylic acid. Examples of the carboxylic anhydride include maleic anhydride, succinic anhydride, phthalic anhydride, and glutaric anhydride. These may be used alone or in combinations of two or more.

To better achieve the advantageous effect, preferred of the carboxylic acid and carboxylic anhydride are maleic acid, fumaric acid, acrylic acid, and maleic anhydride, more preferred are maleic acid and maleic anhydride, and particularly preferred is maleic anhydride.

A liquid diene polymer (a diene polymer which is liquid at room temperature (25°C)) constituting the backbone of the modified liquid diene polymer is desirably a conjugated diene polymer. Preferred examples of the conjugated diene polymer include diene polymers obtainable by polymerizing a conjugated diene-containing monomer such as 1,3-butadiene, isoprene, 1,3-pentadiene, 2,3-dimethyl-1,3-butadiene, 2-methyl-1,3-pentadiene, 1,3-hexadiene, 2-methyl-1,3-pentadiene, 4,5-diethyl-1,3-octadiene, and 3-buty-1,3-octadiene.

Examples of the liquid diene polymer include liquid polybutadiene, liquid polyisoprene, liquid styrene-butadiene random copolymers, liquid styrene-butadiene block copolymers, liquid butadiene-isoprene random copolymers, liquid butadiene-isoprene block copolymers, liquid styrene-butadiene-isoprene random copolymers, and liquid styrene-butadiene-isoprene block copolymers. These may be used alone or in combinations of two or more. To better achieve the advantageous effect, preferred of these are liquid polybutadiene (i.e., a modified liquid polybutadiene modified with the compound as a diene polymer having a moiety derived from at least one compound selected from the group consisting of carboxylic acid and carboxylic anhydride) and liquid polyisoprene (i.e., a modified liquid polyisoprene modified with the compound as a diene polymer having a moiety derived from at least one compound selected from the group consisting of carboxylic acid and carboxylic anhydride), with liquid polyisoprene being more preferred.

To better achieve the advantageous effect, the number average molecular weight (Mn) of the diene polymer having a moiety derived from at least one compound selected from the group consisting of carboxylic acid and carboxylic anhydride is preferably 1000 or more, more preferably 2700 or more, still more preferably 5000 or more, further preferably 10000 or more. The Mn is preferably 70000 or less, more preferably 50000 or less, still more preferably 35000 or less, further preferably 34000 or less.

The modified diene polymer modified with at least one compound selected from the group consisting of carboxylic acid and carboxylic anhydride can be produced by modifying a material unmodified diene polymer with the compound. The modification may be performed by any method including a known method, such as adding the compound to a material unmodified diene polymer.

The diene polymer having a moiety derived from at least one compound selected from the group consisting of carboxylic acid and carboxylic anhydride may be commercially available from, for example, Kraray, Clay Valley, etc.

The amount of the diene polymer having a moiety derived from at least one compound selected from the group consisting of carboxylic acid and carboxylic anhydride based on 100% by mass of the masterbatch is preferably 10%

by mass or more, more preferably 20% by mass or more, still more preferably 25% by mass or more, further preferably 300 by mass or more, further preferably 35% by mass or more, further preferably 40% by mass or more. The amount of the diene polymer is preferably 70% by mass or less, more preferably 65% by mass or less, still more preferably 60% by mass or less, further preferably 55% by mass or less, further preferably 50% by mass or less. When the amount is within the range indicated above, the advantageous effect tends to be better achieved.

The average fiber diameter A (μm) of the microfibrillated cellulose and the number average molecular weight B of the diene polymer having a moiety derived from at least one compound selected from the group consisting of carboxylic acid and carboxylic anhydride satisfy the following formula:

$$(A \times B)/1000 \leq 350.$$

The ratio (A × B)/1000 is preferably 340 or lower, more preferably 300 or lower, still more preferably 150 or lower, further preferably 50 or lower, further preferably 27 or lower, further preferably 17 or lower, further preferably 1 or lower, further preferably 0.68 or lower. The ratio (A × B)/1000 is preferably 0.001 or higher, more preferably 0.01 or higher, still more preferably 0.054 or higher. When the ratio is within the range indicated above, the advantageous effect tends to be better achieved.

In view of the compatibility with rubber when the masterbatch is compounded in the rubber composition, the masterbatch may contain a plasticizer in addition to the above-described components (microfibrillated cellulose having an average fiber diameter of 10 um or less and a diene polymer having a moiety derived from at least one compound selected from the group consisting of carboxylic acid and carboxylic anhydride). The masterbatch may contain other additives such as fillers, inorganic substances, and coupling agents.

The masterbatch preferably contains a plasticizer.

The term "plasticizer" refers to a material that can impart plasticity to rubber components. Examples include liquid plasticizers (plasticizers which are liquid at room temperature (25°C)) and resins (resins which are solid at room temperature (25°C)). In the second aspect of the present invention, the term "plasticizer" conceptually does not include the "modified liquid diene polymer modified with at least one compound selected from the group consisting of carboxylic acid and carboxylic anhydride".

The amount of the plasticizer (total amount of plasticizers) based on 100% by mass of the masterbatch is preferably 10% by mass or more, more preferably 15% by mass or more, still more preferably 20% by mass or more, further preferably 25% by mass or more, further preferably 30% by mass or more. The amount of the plasticizer is preferably 60% by mass or less, more preferably 55% by mass or less, still more preferably 50% by mass or less, further preferably 45% by mass or less, further preferably 40% by mass or less. When the amount is within the range indicated above, the advantageous effect tends to be better achieved.

Non-limiting examples of liquid plasticizers (plasticizers which are liquid at room temperature (25°C)) include oils and liquid polymers (liquid resins, liquid polymers, liquid diene polymers, liquid farnesene polymers). These may be used alone or in combinations of two or more.

The amount of liquid plasticizers based on 100% by mass of the masterbatch is preferably 10% by mass or more, more preferably 15% by mass or more, still more preferably 20% by mass or more, further preferably 25% by mass or more, further preferably 30% by mass or more. The amount of the plasticizers is preferably 60% by mass or less, more preferably 55% by mass or less, still more preferably 500 by mass or less, further preferably 45% by mass or less, further preferably 40% by mass or less. When the amount is within the range indicated above, the advantageous effect tends to be better achieved. The range indicated above is also desirable for the amounts of oils, liquid resins, liquid polymers, liquid diene polymers, and liquid farnesene polymers, which are described later.

Examples of oils include process oils, plant oils, and mixtures thereof. Examples of process oils include paraffinic process oils, aromatic process oils, and naphthenic process oils. Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Examples of commercial products include those available from Idemitsu Kosan Co., Ltd., Sankyo Yuka Kogyo K.K., Japan Energy, Olisoy, H&R, Hokoku Corporation, Showa Shell Sekiyu K.K., Fuji Kosan Co., Ltd., The Nisshin Oillio Group., Ltd., etc. Process oils, such as paraffinic process oils, aromatic process oils, and naphthenic process oils, or plant oils are preferred, with plant oils being more preferred among these. Moreover, in view of life cycle assessment, oils after being used as lubricating oils in mixers for mixing rubber, engines, or other applications, waste cooking oils, or the like may appropriately be used as the process oils or plant oils.

Examples of liquid resins include terpene resins (including terpene phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins,

and acrylic resins. Hydrogenated products of these resins are also usable.

Examples of the liquid polymers include liquid polybutene, liquid polyisobutene, liquid poly-α-olefin, liquid isobutylene, liquid ethylene-α-olefin copolymers, liquid ethylene-propylene copolymers, and liquid ethylenebutylene copolymers. Liquid polybutene is preferred among these. Examples of liquid polybutene include copolymers having a long-chain hydrocarbon molecular structure which is based on isobutene and is further reacted with normal butene. Hydrogenated liquid polybutene is also usable.

Examples of liquid diene polymers include liquid styrene-butadiene copolymers (liquid SBR), liquid butadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers), all of which are liquid at 25°C. The chain end or backbone of these polymers may be modified with a polar group. Hydrogenated products of these polymers are also usable.

Usable commercial products of liquid diene polymers are available from Kraray, Clay Valley, etc.

To better achieve the advantageous effect, the number average molecular weight (Mn) of the liquid diene polymers is preferably 1000 or more, more preferably 2500 or more, still more preferably 5000 or more, further preferably 10000 or more. The Mn is preferably 70000 or less, more preferably 50000 or less, still more preferably 35000 or less, further preferably 34000 or less.

Examples of liquid farnesene polymers include liquid polyfarnesene polymers and liquid farnesene-butadiene copolymers, all of which are liquid at 25°C. The chain end or backbone of these polymers may be modified with a polar group. Hydrogenated products of these polymers are also usable.

Examples of the resins (resins which are solid at room temperature (25°C)) include aromatic vinyl polymers, coumarone-indene resins, coumarone resins, indene resins, phenol resins, rosin resins, petroleum resins, terpene resins, and acrylic resins, all of which are solid at room temperature (25°C). The resins may be hydrogenated. These may be used alone or in combinations of two or more. Aromatic vinyl polymers, petroleum resins, and terpene resins are preferred among these.

The amount of resins based on 100% by mass of the masterbatch is preferably 10% by mass or more, more preferably 15% by mass or more, still more preferably 200 by mass or more, further preferably 25% by mass or more, further preferably 30% by mass or more. The amount of the plasticizer is preferably 60% by mass or less, more preferably 55% by mass or less, still more preferably 500 by mass or less, further preferably 45% by mass or less, further preferably 40% by mass or less. When the amount is within the range indicated above, the advantageous effect tends to be better achieved.

The softening point of the resins is preferably 50°C or higher, more preferably 55°C or higher, still more preferably 60°C or higher. The upper limit is preferably 160°C or lower, more preferably 150°C or lower, still more preferably 145°C or lower. When the softening point is within the range indicated above, the advantageous effect tends to be better achieved.

The softening point of the resins is determined in accordance with in JIS K 6220-1:2001 using a ring and ball softening point measuring apparatus, and the temperature at which the ball drops down is defined as the softening point.

Here, the softening points of the resins are usually within about 50°C ± 5°C of the glass transition temperatures of the respective resin components.

The aromatic vinyl polymers refer to polymers containing aromatic vinyl monomers as structure units. Examples include resins produced by polymerizing α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the backbone (main chain) of the resins. Examples of monomer components which may be contained in the backbone in addition to coumarone and indene include styrene, α-methylstyrene, methylindene, and vinyltoluene.

The coumarone resins refer to resins containing coumarone as the main monomer component forming the backbone (main chain) of the resins.

The indene resins refer to resins containing indene as the main monomer component forming the backbone (main chain) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of these resins. DCPD resins or hydrogenated DCPD resins are preferred among these.

The terpene resins refer to polymers containing terpenes as structural units. Examples include polyterpene resins produced by polymerizing terpene compounds, and aromatic modified terpene resins produced by polymerizing terpene compounds and aromatic compounds. Examples of such aromatic modified terpene resins include terpene

phenol resins made from terpene compounds and phenolic compounds, terpene styrene resins made from terpene compounds and styrene compounds, and terpene phenol styrene resins made from terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds such as styrene and α-methylstyrene.

The acrylic resins refer to polymers containing acrylic monomers as structure units. Examples include styrene acrylic resins, such as those which contain carboxy groups and are produced by copolymerizing aromatic vinyl monomer components and acrylic monomer components. Solvent-free, carboxy group-containing styrene acrylic resins are suitable among these.

Examples of commercial plasticizers include those available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The plasticizer is desirably a plasticizer selected to be suitable for a rubber component in the rubber composition which contains the masterbatch in view of the compatibility with the rubber component. Specifically, when an isoprene-based rubber is used as a rubber component in the rubber composition which contains the masterbatch, the plasticizer is preferably a plant oil. When a butyl-based rubber is used as a rubber component in the rubber composition which contains the masterbatch, the plasticizer is preferably a plant oil, the liquid polymer, or the liquid diene polymer, more preferably the liquid polymer or the liquid diene polymer, still more preferably liquid polybutene or liquid polybutadiene, further preferably liquid polybutene.

The masterbatch preferably has an average particle size of 10 nm or more and 2 mm or less. The average particle size is more preferably 100 nm or more, still more preferably 500 nm or more, further preferably 1 um or more, further preferably 10 um or more, further preferably 50 um or more, further preferably 70 μm or more, further preferably 90 μm or more, further preferably 95 μm or more, further preferably 100 um or more, further preferably 110 um or more, further preferably 120 μm or more, further preferably 300 μm or more, further preferably 500 μm or more, while it is more preferably 1800 um or less, still more preferably 1500 μm or less, further preferably 1200 μm or less. When the average particle size is within the range indicated above, the masterbatch is well dispersed in rubber. Thus, the advantageous effect tends to be better achieved.

Herein, the average particle size of the masterbatch is determined by optical microscopy. Specifically, masterbatch particles are photographed using an optical microscope while the magnification is controlled such that at least 100 fine particles are observed. When a particle has a spherical shape, the particle size is the spherical diameter. When a particle has an acicular or rod shape, the particle size is the minor axis. When a particle has an amorphous shape, the particle size is an average of the particle diameters through the center. An average of the particle sizes of 100 fine particles is calculated and defined as the average particle size.

The masterbatch has a bulk density of preferably 0.50 g/cm$^3$ or more, more preferably 0.60 g/cm$^3$ or more, still more preferably 0.65 g/cm$^3$ or more. The bulk density is preferably 0.80 g/cm$^3$ or less, more preferably 0.70 g/cm$^3$ or less, still more preferably 0.68 g/cm$^3$ or less. When the bulk density is within the range indicated above, the advantageous effect tends to be better achieved.

Herein, the bulk density of the masterbatch can be measured by the method described later in EXAMPLES, for example.

The masterbatch can be produced by a known method, for example, by mixing the above-described components. Examples of the mixing method include mixing a dispersion of the microfibrillated cellulose with the diene polymer having a moiety derived from at least one compound selected from the group consisting of carboxylic acid and carboxylic anhydride and optionally the plasticizer using a known stirring device such as a high-speed homogenizer, an ultrasonic homogenizer, a colloid mill, or a blender mill. The temperature and the time to prepare the masterbatch may be appropriately set to sufficiently mix the components, for example, preferably at 10°C to 40°C for 3 to 120 minutes, more preferably at 15°C to 30°C for 5 to 90 minutes. The resulting mixture is dried by a known method, thereby obtaining a masterbatch.

The dispersion of the microfibrillated cellulose can be prepared by a known method, for example, by dispersing the microfibrillated cellulose in water using a mixer such as a high-pressure homogenizer, an ultrasonic homogenizer, or a colloid mill. The temperature and the time for the preparation may be appropriately set taking the dispersion state into consideration. The amount (solids content) of the microfibrillated cellulose in the dispersion is not limited. In view of homogenous dispersion, the amount in 100% by mass of the dispersion is 0.1 to 20% by mass, preferably 0.2 to 10% by mass, more preferably 0.3 to 5% by mass.

The masterbatch is produced preferably by mixing the dispersion of the microfibrillated cellulose with a hydrophobizing agent, dehydrating the mixture, adding an organic solvent such as 1-butanol to the dehydrated mixture, followed by dispersion to prepare a microfibrillated cellulose dispersion slurry, and then mixing the dispersion slurry with the diene polymer having a moiety derived from at least one compound selected from the group consisting of carboxylic

acid and carboxylic anhydride and optionally the plasticizer. In the masterbatch produced by this method, the microfibrillated cellulose can be better dispersed in the rubber. The methods of the dehydration and the dispersion may be appropriately selected from known methods.

Examples of the hydrophobizing agent include organic acid amine and fatty acid amine.

[Rubber composition]

The rubber composition according to the second aspect of the present invention contains the masterbatch and one or more rubber components.

The amount of the masterbatch per 100 parts by mass of the rubber component content in the rubber composition is preferably 10 parts by mass or more, more preferably 20 parts by mass or more, still more preferably 30 parts by mass or more, further preferably 33.4 parts by mass or more. The upper limit of the amount is preferably 100 parts by mass or less, more preferably 70 parts by mass or less, still more preferably 55 parts by mass or less, particularly preferably 50 parts by mass or less. When the amount is within the range indicated above, the advantageous effect tends to be better achieved.

The microfibrillated cellulose content of the masterbatch per 100 parts by mass of the rubber component content in the rubber composition is preferably 1 part by mass or higher, more preferably 5 parts by mass or higher, still more preferably 10 parts by mass or higher. The upper limit of the amount is preferably 30 parts by mass or lower, more preferably 25 parts by mass or lower, still more preferably 20 parts by mass or lower. When the content is within the range indicated above, the advantageous effect tends to be better achieved.

The weight average molecular weight of the rubber components is preferably 50000 or more, more preferably 150000 or more, still more preferably 200000 or more, while it is preferably 2000000 or less, more preferably 1500000 or less, still more preferably 1000000 or less. When the weight average molecular weight is within the range indicated above, the advantageous effect tends to be better achieved.

The rubber components are not limited, and rubber components known in the tire field may be used. Examples include diene-based rubbers such as isoprene-based rubbers, polybutadiene rubbers (BR), styrene-butadiene rubbers (SBR), acrylonitrile-butadiene rubbers (NBR), chloroprene rubbers (CR), and styrene-isoprene-butadiene copolymer rubbers (SIBR), and butyl-based rubbers. Each of these rubber components may be used alone, or two or more of these may be used in combination. To better achieve the advantageous effect, at least one of isoprene-based rubbers, BR, SBR, and butyl-based rubbers is preferably used, and an isoprene-based rubber or a butyl-based rubber is more preferably used.

In particular, when the rubber composition is for use in sidewalls, an isoprene-based rubber, BR, or SBR is preferably used, and an isoprene-based rubber is more preferably used. When the rubber composition is for use in innerliners, a butyl-based rubber is preferably used.

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used, including for example those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

The amount of isoprene-based rubbers based on 100% by mass of the rubber component content in the rubber composition is preferably 5% by mass or more, more preferably 50% by mass or more, still more preferably 80% by mass or more, particularly preferably 90% by mass or more, and may be 100% by mass. When the amount is within the range indicated above, the advantageous effect tends to be better achieved.

Any BR may be used, and examples include those commonly used in the tire industry, including: high-cis BR such as BR1220 available from Zeon Corporation, BR150B available from Ube Industries, Ltd., and BR1280 available from LG Chem; BR containing 1,2-syndiotactic polybutadiene crystals (SPB) such as VCR412 and VCR617 both available from Ube Industries, Ltd.; and polybutadiene rubbers synthesized using rare earth catalysts (rare earthcatalyzed BR). These may be used alone or in combinations of two or more.

The cis content of the BR is preferably 80% by mass or higher, more preferably 85% by mass or higher, still more preferably 90% by mass or higher, while it is preferably 99% by mass or lower, more preferably 98% by mass or lower, still more preferably 97% by mass or lower. When the cis content is within the range indicated above, the advantageous effect tends to be better achieved.

Here, the cis content of the BR can be measured by infrared absorption spectrometry.

When the rubber composition contains BR, the amount of the BR based on 100% by mass of the rubber component content is preferably 5% by mass or more, more preferably 10% by mass or more, still more preferably 15%

by mass or more, while it is preferably 50% by mass or less, more preferably 40% by mass or less, still more preferably 300 by mass or less. When the amount is within the range indicated above, the advantageous effect tends to be better achieved.

Any SBR may be used, and examples include emulsionpolymerized styrene-butadiene rubbers (E-SBR) and solutionpolymerized styrene-butadiene rubbers (S-SBR). Examples of commercial products include those available from Sumitomo Chemical Co., Ltd., JSR Corporation, Asahi Kasei Corporation, Zeon Corporation, etc.

The styrene content of the SBR is preferably 5% by mass or higher, more preferably 10% by mass or higher, still more preferably 15% by mass or higher, particularly preferably 20% by mass or higher. The styrene content is preferably 50% by mass or lower, more preferably 45% by mass or lower, still more preferably 40% by mass or lower. When the styrene content is within the range indicated above, the advantageous effect tends to be better achieved.

Herein, the styrene content of the SBR can be determined by $^1$H-NMR analysis.

The vinyl content of the SBR is preferably 10% by mass or higher, more preferably 20% by mass or higher, still more preferably 30% by mass or higher. The vinyl content is preferably 90% by mass or lower, more preferably 80% by mass or lower, still more preferably 70% by mass or lower. When the vinyl content is within the range indicated above, the advantageous effect tends to be better achieved.

Herein, the vinyl content (1,2-butadiene unit content) of the SBR can be measured by infrared absorption spectrometry.

When the rubber composition contains SBR, the amount of the SBR based on 100% by mass of the rubber component content is preferably 5% by mass or more, more preferably 10% by mass or more, still more preferably 15% by mass or more, while it is preferably 50% by mass or less, more preferably 40% by mass or less, still more preferably 300 by mass or less. When the amount is within the range indicated above, the advantageous effect tends to be better achieved.

Examples of butyl-based rubbers include halogenated butyl rubbers (X-IIR), such as brominated butyl rubbers (Br-IIR) and chlorinated butyl rubbers (Cl-IIR), polybutyl rubbers (IIR), copolymers of isobutylene and p-alkylstyrene, and halogenated products of the copolymers. Examples of commercial products include those available from Exxon Mobil Corporation, JSR Corporation, Japan Butyl Co., Ltd., etc. These may be used alone or in combinations of two or more. Halogenated butyl rubbers are preferred, with brominated butyl rubbers being more preferred among these.

The amount of butyl-based rubbers based on 100% by mass of the rubber component content in the rubber composition is preferably 5% by mass or more, more preferably 50% by mass or more, still more preferably 80% by mass or more, particularly preferably 90% by mass or more, and may be 100% by mass. When the amount is within the range indicated above, the advantageous effect tends to be better achieved.

The rubber components may include extended rubbers which have been extended by plasticizer components such as oils, resins, and liquid rubbers. These may be used alone or in combinations of two or more. Examples of the plasticizers used in such extended rubbers include those described above. The amount of the plasticizers in the extended rubbers is not limited, and it is usually about 10 to 50 parts by mass per 100 parts by mass of the rubber solids content.

The rubber components may be modified to introduce therein a functional group interactive with filler such as silica.

Examples of the functional group include a silicon-containing group ($-SiR_3$ where each R is the same or different and represents a hydrogen atom, a hydroxyl group, a hydrocarbon group, an alkoxy group, or the like), an amino group, an amide group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxy group, a nitrile group, a pyridyl group, an alkoxy group, a hydroxyl group, an oxy group, and an epoxy group, each of which may be substituted. Preferred among these is a silicon-containing group. More preferred is $-SiR_3$ where each R is the same or different and represents a hydrogen atom, a hydroxyl group, a hydrocarbon group (preferably a C1-C6 hydrocarbon group, more preferably a C1-C6 alkyl group), or an alkoxy group (preferably a C1-C6 alkoxy group), and at least one R is a hydroxyl group.

Specific examples of the compound (modifier) used to introduce the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

The rubber composition may contain a filler.

In the second aspect of the present invention, the term "filler" conceptually does not include the "microfibrillated cellulose".

The amount of fillers per 100 parts by mass of the rubber component content in the rubber composition is preferably 10 parts by mass or more, more preferably 20 parts by mass or more, still more preferably 30 parts by mass or more. The upper limit of the amount is preferably 100 parts by mass or less, more preferably 70 parts by mass or less, still more preferably 55 parts by mass or less, particularly preferably 50 parts by mass or less. When the amount

is within the range indicated above, the advantageous effect tends to be better achieved.

In particular, when the rubber composition is for use in sidewalls, the amount of fillers per 100 parts by mass of the rubber component content is preferably 10 parts by mass or more, more preferably 20 parts by mass or more, still more preferably 30 parts by mass or more, while it is preferably 70 parts by mass or less, more preferably 55 parts by mass or less, still more preferably 50 parts by mass or less, further preferably 40 parts by mass or less.

When the rubber composition is for use in innerliners, the amount of fillers per 100 parts by mass of the rubber component content is preferably 20 parts by mass or more, more preferably 30 parts by mass or more, still more preferably 40 parts by mass or more, while it is preferably 100 parts by mass or less, more preferably 70 parts by mass or less, still more preferably 55 parts by mass or less, further preferably 50 parts by mass or less.

The fillers may be known materials in the rubber field. Examples include inorganic fillers such as silica, carbon black, calcium carbonate, talc, alumina, clay, aluminum hydroxide, aluminum oxide, and mica; and bio char. To better achieve the advantageous effect, carbon black or silica is preferred, with carbon black being more preferred among these.

Any carbon black may be used, and examples include N134, N110, N220, N234, N219, N339, N330, N326, N351, N550, N660, and N762. Examples of commercial products include those available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. In addition to the above-described carbon black made from mineral oils or the like, carbon black made from biomass materials such as lignin is also usable. These may be used alone or in combinations of two or more.

The nitrogen adsorption specific surface area ($N_2SA$) of the carbon black is preferably 10 $m^2/g$ or more, more preferably 15 $m^2/g$ or more, still more preferably 20 $m^2/g$ or more, further preferably 35 $m^2/g$ or more, further preferably 42 $m^2/g$ or more. The $N_2SA$ is preferably 100 $m^2/g$ or less, more preferably 80 $m^2/g$ or less, still more preferably 60 $m^2/g$ or less, particularly preferably 50 $m^2/g$ or less. When the $N_2SA$ is within the range indicated above, the advantageous effect tends to be better achieved.

Here, the nitrogen adsorption specific surface area of the carbon black can be determined in accordance with JIS K 6217-2:2001.

In particular, when the rubber composition is for use in sidewalls, the nitrogen adsorption specific surface area ($N_2SA$) of the carbon black is preferably 10 $m^2/g$ or more, more preferably 15 $m^2/g$ or more, still more preferably 20 $m^2/g$ or more, further preferably 35 $m^2/g$ or more, further preferably 42 $m^2/g$ or more. The $N_2SA$ is preferably 100 $m^2/g$ or less, more preferably 80 $m^2/g$ or less, still more preferably 60 $m^2/g$ or less, particularly preferably 50 $m^2/g$ or less. When the $N_2SA$ is within the range indicated above, the advantageous effect tends to be better achieved.

When the rubber composition is for use in innerliners, the nitrogen adsorption specific surface area ($N_2SA$) of the carbon black is preferably 10 $m^2/g$ or more, more preferably 15 $m^2/g$ or more, still more preferably 20 $m^2/g$ or more, further preferably 35 $m^2/g$ or more. The $N_2SA$ is preferably 100 $m^2/g$ or less, more preferably 80 $m^2/g$ or less, still more preferably 60 $m^2/g$ or less, further preferably 50 $m^2/g$ or less, particularly preferably 40 $m^2/g$ or less. When the $N_2SA$ is within the range indicated above, the advantageous effect tends to be better achieved.

The amount of carbon black per 100 parts by mass of the rubber component content in the rubber composition is preferably 10 parts by mass or more, more preferably 20 parts by mass or more, still more preferably 30 parts by mass or more. The upper limit of the amount is preferably 100 parts by mass or less, more preferably 70 parts by mass or less, still more preferably 55 parts by mass or less, further preferably 50 parts by mass or less. When the amount is within the range indicated above, the advantageous effect tends to be better achieved.

In particular, when the rubber composition is for use in sidewalls, the amount of carbon black per 100 parts by mass of the rubber component content in the rubber composition is preferably 10 parts by mass or more, more preferably 20 parts by mass or more, still more preferably 30 parts by mass or more, while it is preferably 70 parts by mass or less, more preferably 55 parts by mass or less, still more preferably 50 parts by mass or less, further preferably 40 parts by mass or less.

When the rubber composition is for use in innerliners, the amount of carbon black per 100 parts by mass of the rubber component content in the rubber composition is preferably 20 parts by mass or more, more preferably 30 parts by mass or more, still more preferably 40 parts by mass or more, while it is preferably 100 parts by mass or less, more preferably 70 parts by mass or less, still more preferably 55 parts by mass or less, further preferably 50 parts by mass or less.

Examples of silica include dry silica (anhydrous silica) and wet silica (hydrous silica). Wet silica is preferred among these because it contains a large number of silanol groups. Examples of commercial products include those available from Degussa, Rhodia, Tosoh Silica Corporation, Solvay Japan, Tokuyama Corporation, etc. Silica made from biomass materials such as rice husks is also usable. These may be used alone or in combinations of two or more.

The nitrogen adsorption specific surface area ($N_2SA$) of the silica is preferably 50 $m^2/g$ or more, more preferably 100 $m^2/g$ or more, still more preferably 150 $m^2/g$ or more, particularly preferably 170 $m^2/g$ or more. The upper limit of the $N_2SA$ of the silica is not limited, and it is preferably 350 $m^2/g$ or less, more preferably 300 $m^2/g$ or less, still more preferably 250 $m^2/g$ or less. When the $N_2SA$ is within the range indicated above, the advantageous effect tends to be better achieved.

Here, the $N_2SA$ of the silica is measured by a BET method in accordance with ASTM D3037-93.

The average particle size of the silica is preferably 24 nm or less, more preferably 20 nm or less, still more preferably 18 nm or less, while it is preferably 6 nm or more, more preferably 9 nm or more, still more preferably 12 or more. When the average particle size is within the range indicated above, the advantageous effect tends to be better achieved.

When the rubber composition contains a silica, the amount of the silica per 100 parts by mass of the rubber component content is preferably 10 parts by mass or more, more preferably 30 parts by mass or more, still more preferably 50 parts by mass or more. The upper limit of the amount is preferably 120 parts by mass or less, more preferably 100 parts by mass or less, still more preferably 80 parts by mass or less. When the amount is within the range indicated above, the advantageous effect tends to be better achieved.

The rubber composition which contains a silica preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as $\gamma$-glycidoxypropyltriethoxysilane and $\gamma$-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Examples of commercial products include those available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica content in the rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

Regardless of the presence or absence of a plasticizer in the masterbatch, the rubber composition may contain a plasticizer. Examples of the plasticizer include those usable in the masterbatch.

In particular, when the rubber composition is for use in innerliners, the rubber composition preferably contains the resin as the additional plasticizer. The resin is more preferably a petroleum resin, still more preferably a C5 resin, a C9 resin, or a C5/C9 resin, particularly preferably a C5/C9 resin.

The amount of plasticizers (total amount of the plasticizer in the masterbatch and the additional plasticizer in the rubber composition) per 100 parts by mass of the rubber component content in the rubber composition is preferably 5 parts by mass or more, more preferably 8 parts by mass or more, still more preferably 10 parts by mass or more, further preferably 13 parts by mass or more, while it is preferably 63 parts by mass or less, more preferably 53 parts by mass or less, still more preferably 43 parts by mass or less, further preferably 40 parts by mass or less, further preferably 33 parts by mass or less, further preferably 30 parts by mass or less, further preferably 23 parts by mass or less, further preferably 20 parts by mass or less, further preferably 17 parts by mass or less. When the amount is within the range indicated above, the advantageous effect tends to be better achieved. Here, the amount of plasticizers includes the amount of the plasticizer components used in the extended rubbers.

The rubber composition may contain an antioxidant.

Examples of antioxidants include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Examples of commercial products include those available from Seiko Chemical Co., Ltd., Sumitomo Chemical Co., Ltd., Ouchi Shinko Chemical Industrial Co., Ltd., Flexsys, etc. These may be used alone or in combinations of two or more.

The amount of antioxidants per 100 parts by mass of the rubber component content in the rubber composition is preferably 1 part by mass or more, more preferably 2 parts by mass or more, still more preferably 2.5 parts by mass or more, still more preferably 3 parts by mass or more, while it is preferably 10 parts by mass or less, more preferably

6 parts by mass or less, still more preferably 5 parts by mass or less. When the amount is within the range indicated above, the advantageous effect tends to be better achieved.

The rubber composition may contain a wax.

Any wax may be used, and examples include petroleum waxes such as paraffin waxes and microcrystalline waxes; naturally-occurring waxes such as plant waxes and animal waxes; and synthetic waxes such as polymerized ethylene, propylene, or other similar monomers. Examples of commercial products include those available from Ouchi Shinko Chemical Industrial Co., Ltd., Nippon Seiro Co., Ltd., Seiko Chemical Co., Ltd., etc. These may be used alone or in combinations of two or more.

The amount of waxes per 100 parts by mass of the rubber component content in the rubber composition is preferably 1 part by mass or more, more preferably 2 parts by mass or more, while it is preferably 10 parts by mass or less, more preferably 6 parts by mass or less. When the amount is within the range indicated above, the advantageous effect tends to be better achieved.

The rubber composition may contain stearic acid.

Conventionally known stearic acid may be used. Examples of commercial products include those available from NOF Corporation, Kao Corporation, Fujifilm Wako Pure Chemical Corporation, Chiba Fatty Acid Co., Ltd., etc. These may be used alone or in combinations of two or more.

The amount of stearic acid per 100 parts by mass of the rubber component content in the rubber composition is preferably 1 part by mass or more, more preferably 2 parts by mass or more, while it is preferably 10 parts by mass or less, more preferably 6 parts by mass or less. When the amount is within the range indicated above, the advantageous effect tends to be better achieved.

The rubber composition may contain sulfur.

Examples of sulfur include those commonly used as crosslinking agents in the rubber industry, such as powdered sulfur, precipitated sulfur, colloidal sulfur, insoluble sulfur, highly dispersible sulfur, and soluble sulfur. Examples of commercial products include those available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The amount of sulfur per 100 parts by mass of the rubber component content in the rubber composition is preferably 0.5 parts by mass or more, more preferably 1.0 parts by mass or more, still more preferably 1.5 parts by mass or more, further preferably 1.8 parts by mass or more, while it is preferably 3.5 parts by mass or less, more preferably 2.8 parts by mass or less, still more preferably 2.5 parts by mass or less. When the amount is within the range indicated above, the advantageous effect tends to be better achieved.

The rubber composition may contain a vulcanization accelerator.

Examples of vulcanization accelerators include benzothiazole vulcanization accelerators such as 2-mercaptobenzothiazole and di-2-benzothiazolyl disulfide; thiuram vulcanization accelerators such as tetramethylthiuram disulfide (TMTD) and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Examples of commercial products include those available from Sumitomo Chemical Co., Ltd., Ouchi Shinko Chemical Industrial Co., Ltd., etc. These may be used alone or in combinations of two or more.

The amount of vulcanization accelerators per 100 parts by mass of the rubber component content in the rubber composition is preferably 0.5 parts by mass or more, more preferably 0.8 parts by mass or more, still more preferably 1.0 parts by mass or more, while it is preferably 10 parts by mass or less, more preferably 8 parts by mass or less, still more preferably 7 parts by mass or less. When the amount is within the range indicated above, the advantageous effect tends to be better achieved.

In addition to the above-described components, the rubber composition may further contain additives commonly used in the tire industry, such as zinc oxide and organic peroxides. The amounts of these additives are each preferably 0.1 to 200 parts by mass per 100 parts by mass of the rubber component content.

The rubber composition may be prepared by known methods. For example, it may be prepared by kneading the components using a rubber kneading machine such as an open roll mill or a Banbury mixer, and then vulcanizing the kneaded mixture.

The kneading conditions are as follows. In a base kneading step of kneading additives other than vulcanizing agents and vulcanization accelerators, the kneading temperature is usually 50°C to 200°C, preferably 80°C to 190°C, and the kneading time is usually 30 seconds to 30 minutes, preferably one minute to 30 minutes. In a final kneading step of kneading vulcanizing agents and vulcanization accelerators, the kneading temperature is usually 100°C or lower, preferably from room temperature to 80°C. Then, the composition obtained after kneading vulcanizing agents and vulcanization accelerators is usually vulcanized by press vulcanization, for example. The vulcanization temperature is usually 120°C to 200°C, preferably 140°C to 180°C.

[Tire]

The tire according to the second aspect of the present invention is produced using the rubber composition by a usual method. Specifically, an unvulcanized rubber composition is extruded into the shape of a tire component and then molded together with other tire components on a tire building machine by a usual method to form an unvulcanized tire. Next, the unvulcanized tire is heated and pressurized in a vulcanizer. Accordingly, the tire can be produced.

Non-limiting examples of the tire component include tire components such as treads (cap tread), sidewalls, base treads, beat apexes, clinch apexes, innerliners, undertreads, breaker toppings, and ply toppings. To better achieve the advantageous effect, the tire component is preferably a sidewall, a tread, or an innerliner, more preferably a sidewall or an innerliner.

Examples of the tire include pneumatic tires and nonpneumatic tires. The tire is preferably a pneumatic tire among these. For example, the tire can be suitably used as a summer tire or a winter tire (studless tire, snow tire, studded tire, etc.). The tire can be used for passenger cars, large passenger cars, large SUVs, heavy-duty vehicles such as trucks and buses, light trucks, or motorcycles, or as a racing tire (high performance tire), etc.

EXAMPLES

The present invention is specifically described below with reference to examples. Yet, the present invention is not limited to the examples.

The chemicals used in preparation of microfibrillated plant fiber dispersion (CNF aqueous dispersion), preparation of CNF-containing mixture, and preparation of CNF-containing composite in examples and comparative examples according to the first aspect of the present invention are listed below.

Microfibrillated plant fiber: biomass nanofiber (trade name "BiNFi-s cellulose", solids content: 2% by mass, moisture content: 98% by mass, average fiber diameter: 20 to 50 nm, average fiber length: 500 to 1000 nm, degree of crystallinity: 70%) available from Sugino Machine Limited

TEMPO: 2,2,6,6-tetramethylpiperidine-1-oxyl
Sodium bromide: a product available from FUJIFILM Wako Pure Chemical Corporation
Sodium hypochlorite: a product available from Tokyo Chemical Industry Co., Ltd.
NaOH: NaOH available from FUJIFILM Wako Pure Chemical Corporation
Styrene-maleic acid copolymer 1: DKS DISCOAT N-10 (a composition containing a polymer represented by the following formula, content of the polymer represented by the formula: about 30%) available from DKS Co., Ltd.

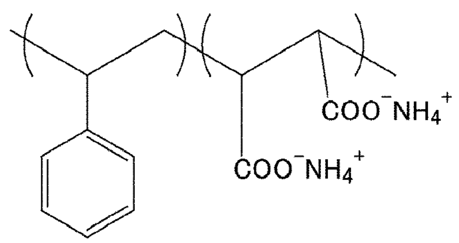

Styrene-maleic acid copolymer 2: DKS DISCOAT N-15 (a composition containing a polymer represented by the following formula, content of the polymer represented by the formula: about 290) available from DKS Co., Ltd.

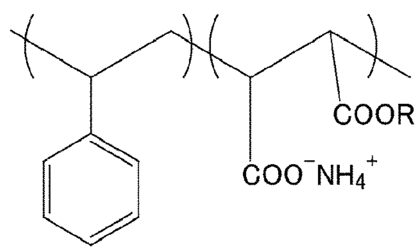

(R: alkyl group)
Modified liquid polyisoprene: LIR-403 (maleic anhydride-modified liquid polyisoprene, Mn = 34000) available from

Kraray
Oil: canola oil available from The Nisshin Oillio Group
Natural rubber latex: field latex procured from Muhibbah LATEKS
BR latex: prepared by the following method

The BR latex is prepared by the method described below. The chemicals used are as follows.

Water: distilled water
Emulsifier (1): rosin acid soap available from Harima Chemicals Group, Inc.
Emulsifier (2): fatty acid soap available from Wako Pure Chemical Industries, Ltd.
Electrolyte: sodium phosphate available from Wako Pure Chemical Industries, Ltd.
Polybutadiene: 1,3-butadiene available from Takachiho Chemical Industrial Co., Ltd.
Molecular weight regulator: tert-dodecylmercaptan available from Wako Pure Chemical Industries, Ltd.
Radical initiator: paramenthane hydroperoxide available from NOF Corporation
SFS: sodium formaldehyde sulfoxylate available from Wako Pure Chemical Industries, Ltd.
EDTA: sodium ethylenediaminetetraacetate available from Wako Pure Chemical Industries, Ltd.
Catalyst: ferric sulfate available from Wako Pure Chemical Industries, Ltd.
Polymerization terminator: N,N'-dimethyldithiocarbamate available from Wako Pure Chemical Industries, Ltd.

(Preparation of polybutadiene rubber latex)

According to the composition of charged ingredients shown in Table 1, water, emulsifier (1), emulsifier (2), an electrolyte, polybutadiene, and a molecular weight regulator are charged into a pressure-resistant reactor equipped with a stirrer. The reactor temperature is set to 5°C. An aqueous solution containing a radical initiator and SFS dissolved therein and an aqueous solution containing EDTA and a catalyst dissolved therein are added to the reactor to initiate polymerization. Five hours after the initiation of polymerization, a polymerization terminator is added to stop the reaction, whereby a polybutadiene rubber latex is obtained.

(Preparation of microfibrillated plant fiber dispersion (CNF aqueous dispersion))

An amount of 10 g of microfibrillated plant fibers, 150 mg of TEMPO, and 1000 mg of sodium bromide are dispersed in 1000 mL of water. To the dispersion is added a 15% by mass sodium hypochlorite aqueous solution such that the amount of sodium hypochlorite is 5 mmol per gram (absolute dry weight) of the microfibrillated plant fibers, and a reaction is initiated. The pH during the reaction is maintained at 10.0 by dropwise adding a 3M aqueous NaOH solution. The reaction is considered to be completed when the pH no longer changes. The reaction product is filtered through a glass filter and then subjected to five cycles of washing with plenty of water and filtration, thereby obtaining reacted water-impregnated fibers with a solids content of 15% by mass. The fibers are further diluted to form a 1% by mass CNF aqueous dispersion.

(Preparation of CNF-containing mixture)

Predetermined amounts of styrene-maleic acid copolymer 1 or 2, a modified liquid polyisoprene, and an oil are added to the 1% by mass CNF aqueous dispersion according to the formulation recipe in Table 2. They are stirred at room temperature (20°C to 30°C) for five minutes using a high-speed homogenizer, thereby obtaining a CNF-containing mixture (mixed solution).

(Preparation of CNF-containing composite)

The CNF-containing mixture, a natural rubber latex (NR latex), and a polybutadiene rubber latex (BR latex) are mixed according to the formulation recipe in Table 3 (10 parts by mass (solids content) of CNF per 100 parts by mass of rubber solids content), and they are stirred at room temperature for five minutes using a high-speed homogenizer to give a compounded latex with pH 10.2. Then, 2% by mass formic acid is added to the compounded latex at room temperature to pH 3 to 4 to give a coagulum. The coagulum is filtrated and then dried, thereby obtaining a CNF-containing composite (masterbatch).

The CNF-containing mixtures 1, 2, 3, 4, 5, 6, 7, 8, and 9 in Table 2 are respectively used in Examples 1, 2, 3, 4, 5, 6, 7, and 8 and Comparative Example 1 in Table 3 to prepare masterbatches MB 1, 2, 3, 4, 5, 6, 7, 8, and 9.

The chemicals used in production of test tires in examples and comparative examples according to the first aspect of the present invention are listed below.

CNF-containing composites (MB 1 to MB 9): produced in preparation of CNF-containing composite described above

Carbon black: SHOBLACK N550 ($N_2SA$:42 $m^2/g$) available from Cabot Japan K.K.
Silica: ULTRASIL VN3 ($N_2SA$: 175 $m^2/g$, average particle size: 18 nm) available from Degussa
Silane coupling agent: Si69 (bis(3-triethoxysilylpropyl)tetrasulfide) available from Degussa
Antioxidant: Ozonone 6C (N-(1,3-dimethylbutyl)-N'-phenyl-p-phenylenediamine) available from Seiko Chemical Co., Ltd.
Wax: Ozoace 0355 available from Nippon Seiro Co., Ltd.
Stearic acid: stearic acid "TSUBAKI" available from NOF Corporation
Zinc oxide: zinc oxide #1 available from Mitsui Mining & Smelting Co., Ltd.
Sulfur: powdered sulfur available from Tsurumi Chemical Industry Co., Ltd.
Vulcanization Accelerator: NOCCELER NS (N-tert-butyl-2-benzothiazolylsulfenamide) available from Ouchi Shinko Chemical Industrial Co., Ltd.

<Production of test tire>

According to the formulation recipe shown in Table 3, the materials other than the sulfur and vulcanization accelerators are kneaded for five minutes at 150°C using a 1.7-L Banbury mixer (Kobe Steel, Ltd.) to give a kneaded mixture. Next, the sulfur and vulcanization accelerators are added to the kneaded mixture, and they are kneaded for five minutes at 80°C using an open roll mill to obtain an unvulcanized rubber composition. The unvulcanized rubber composition is formed into the shape of a sidewall and assembled with other tire components to build an unvulcanized tire. The unvulcanized tire is press-vulcanized at 150°C for 12 minutes to prepare a test tire (size: 175/60R18).

The test tire is subjected to the following evaluations. Table 3 shows the results.

Here, the reference comparative example is Comparative Example 1.

<Viscoelastic testing>

A viscoelastic testing sample having a length of 40 mm, a width of 3 mm, and a thickness of 0.5 mm is collected from the inside of a sidewall rubber layer in the test tire such that the longer side of the sample corresponds to the tire circumferential direction. Another sample is similarly collected such that the longer side thereof corresponds to the tire radial direction. The 30°C tan δa (in the tire circumferential direction), the 30°C E*a (in the tire circumferential direction), and the 30°C tan δb (in the tire radial direction) of each sample are measured at a temperature of 30°C, an initial strain of 10%, a dynamic strain of 1%, a frequency of 10 Hz, and an elongation mode using a RSA series measuring machine available from TA Instruments.

<Handling stability during high-speed driving>

The test tire is mounted on every wheel of a vehicle. The vehicle is driven five times on a test course with dry road surface for time attack to determine the best time. A reduction in time calculated by subjecting the best time from the time (the longest time) when commercial tires are used is calculated and is expressed as an index relative to the value of the reference comparative example set to 100. A higher index means a longer reduced time (shorter best time), indicating better handling stability (dry handling stability) during high-speed driving.

<Fuel economy>

The rolling resistance of the test tire during driving at 80 km/h is measured using a rolling resistance tester. The measured value is expressed as an index relative to the value of the reference comparative example set to 100. A higher index means a lower rolling resistance, indicating better fuel economy.

<Overall performance>

Overall performance in terms of handling stability during high-speed driving and fuel economy is evaluated based on a sum of the two indices obtained in the evaluation of handling stability during high-speed driving and the evaluation of fuel economy. A higher value indicates better overall performance.

[Table 1]

| | | BR latex |
|---|---|---|
| Charged amount (parts by mass) | Water | 200 |
| | Emulsifier (1) | 4.5 |
| | Emulsifier (2) | 0.15 |
| | Electrolyte | 0.8 |
| | Polybutadiene | 100 |
| | Molecular weight regulator | 0.2 |
| | Radical initiator | 0.1 |
| | SFS | 0.15 |
| | EDTA | 0.07 |
| | Catalyst | 0.05 |
| | Polymerization terminator | 0.2 |

[Table 2]

| | | CNF-containing mixture | | | | | | | | |
|---|---|---|---|---|---|---|---|---|---|---|
| | | 1 | 2 | 3 | 4 | 5 | 6 | 7 | 8 | 9 |
| Formulation (parts by mass) | CNF (solids content) | 10 | 10 | 20 | 20 | 10 | 20 | 10 | 10 | 10 |
| | Styrene-maleic acid copolymer 1 | 5 | | 10 | | 10 | 10 | 5 | | |
| | Styrene-maleic acid copolymer 2 | | 5 | | 10 | | | | | |
| | Modified liquid polyisoprene | | | | | | | | 5 | |
| | Oil | 10 | 10 | 10 | 10 | 10 | | | 10 | 10 |

Amounts of styrene-maleic acid copolymers 1 and 2 are amounts of DKS discoat N-10 and N-15, respectively.

[Table 3]

| | | Example | | | | | | | | Comparative Example | | |
|---|---|---|---|---|---|---|---|---|---|---|---|---|
| | | 1 | 2 | 3 | 4 | 5 | 6 | 7 | 8 | 1 | 2 | 3 |
| Formulation (parts by mass) | Masterbatch | MB1 | MB2 | MB3 | MB4 | MB5 | MB6 | MB7 | MB8 | MB9 | | |
| | NR | 100 | 100 | 100 | 100 | 100 | 70 | 70 | 100 | 100 | 100 | 100 |
| | BR | | | | | | 30 | 30 | | | | |
| | CNF | 10 | 10 | 20 | 20 | 10 | 20 | 10 | 10 | 10 | 0 | 0 |
| | Styrene-maleic acid copolymer 1 | 5 | | 10 | | 10 | 10 | 5 | | | 10 | 0 |
| | Styrene-maleic acid copolymer 2 | | 5 | | 10 | | | | | | | |
| | Modified liquid polyisoprene | | | | | | | | 5 | | | |
| | Oil | 10 | 10 | 10 | 10 | 10 | | | 10 | 10 | 10 | 10 |
| | Carbon black | 30 | 30 | 30 | 30 | 30 | 5 | 5 | 30 | 30 | 30 | 30 |
| | Silica | | | | | | 80 | 80 | | | | |
| | Silane coupling agent | | | | | | 6.4 | 6.4 | | | | |
| | Antioxidant | 3 | 3 | 3 | 3 | 3 | 3 | 3 | 3 | 3 | 3 | 3 |
| | Wax | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 |
| | Zinc oxide | 3 | 3 | 3 | 3 | 3 | 3 | 3 | 3 | 3 | 3 | 3 |
| | Sulfur | 1.5 | 1.5 | 1.5 | 1.5 | 1.5 | 1.5 | 1.5 | 1.5 | 1.5 | 1.5 | 1.5 |
| | Vulcanization accelerator | 1 | 1 | 1 | 1 | 1 | 1 | 1 | 1 | 1 | 1 | 1 |
| Physical properties/Evaluation | Viscoelastic testing | | | | | | | | | | | |
| | 30°C E*a (MPa) in tire circumferential direction | 5.2 | 5.7 | 9.7 | 10.7 | 5.0 | 20.0 | 16.0 | 9.9 | 7.7 | 3.0 | 2.4 |
| | 30°C tan δa in tire circumferential direction | 0.140 | 0.144 | 0.205 | 0.194 | 0.150 | 0.260 | 0.240 | 0.137 | 0.145 | 0.093 | 0.095 |
| | 30°C tan δb in tire radial direction | 0.135 | 0.133 | 0.230 | 0.183 | 0.145 | 0.242 | 0.235 | 0.133 | 0.149 | 0.097 | 0.103 |
| | 30°C E*a/30°C tan δa | 37 | 40 | 47 | 55 | 33 | 77 | 67 | 72 | 53 | 32 | 25 |
| | 30°C tan δa/30°C tan δb | 1.04 | 1.08 | 0.89 | 1.06 | 1.03 | 1.07 | 1.02 | 1.03 | 0.97 | 0.96 | 0.92 |
| | Filler content Fc/30 °C E*a | 5.77 | 5.27 | 3.10 | 2.82 | 6.00 | 4.25 | 5.31 | 3.03 | 3.90 | 10.00 | 12.55 |
| | Tire performance | | | | | | | | | | | |
| | (a) Handling stability during high-speed driving | 120 | 122 | 133 | 135 | 110 | 118 | 115 | 125 | 100 | 80 | 75 |
| | (b) Fuel economy | 110 | 112 | 113 | 115 | 100 | 115 | 120 | 115 | 100 | 100 | 100 |
| | Overall performance (= (a) + (b)) | 230 | 234 | 246 | 250 | 210 | 233 | 235 | 240 | 200 | 180 | 175 |

Amounts of styrene-maleic acid copolymers 1 and 2 are amounts of DKS discoat N-10 and N-15, respectively.

The chemicals used in preparation of microfibrillated cellulose dispersion (CNF aqueous dispersion) and preparation of masterbatch in examples and comparative examples according to the second aspect of the present invention are listed below.

Microfibrillated cellulose 1: trade name "BiNFi-s cellulose" (solids content: 5% by mass, moisture content: 95% by mass) available from Sugino Machine Limited

Microfibrillated cellulose 2: trade name "BiNFi-s cellulose" (solids content: 5% by mass, moisture content: 95% by mass) available from Sugino Machine Limited
Microfibrillated cellulose 3: cellulose (powder, filtrated through 400 mesh (38 um)) available from Fujifilm Wako Pure Chemical Corporation
Microfibrillated cellulose 4: cellulose (powder, filtrated through 400 mesh (38 um)) available from Fujifilm Wako Pure Chemical Corporation
TEMPO: 2,2,6,6-tetramethylpiperidine-1-oxyl
Sodium bromide: a product available from FUJIFILM Wako Pure Chemical Corporation
Sodium hypochlorite: a product available from Tokyo Chemical Industry Co., Ltd.
NaOH: NaOH available from FUJIFILM Wako Pure Chemical Corporation
Hydrophobizing agent: CHELESLITE CW available from Chelest Corporation
Modified liquid polyisoprene: LIR-403 (maleic anhydride-modified liquid polyisoprene, Mn = 34000) available from Kraray
Modified liquid polybutadiene: Ricon 130MA8 (maleic anhydride-modified polybutadiene, Mn = 2700) available from Cray Valley
Liquid polybutene: HV-300 available from ENEOS Corporation
Liquid polybutadiene: Ricon 130 (Mn = 2500) available from Cray Valley
Oil: canola oil available from The Nisshin Oillio Group

(Dissociation of microfibrillated cellulose)

Usually, microfibrillated cellulose is dissociated by dry or wet micro milling using a high-pressure homogenizer, a microfluidizer, a ball mill, a disk mill, or a mixer such as a homo mixer. Microfibrillated celluloses with different average fiber diameters can be prepared by varying the duration and the pass number. Through the above-described operation, microfibrillated cellulose 1 having an average fiber diameter of 0.02 um, microfibrillated cellulose 2 having an average fiber diameter of 0.05 um, microfibrillated cellulose 3 having an average fiber diameter of 10 μm, and microfibrillated cellulose 4 having an average fiber diameter of 20 μm are obtained.
The average fiber diameter of microfibrillated cellulose is measured using a laser diffraction/scattering particle size distribution analyzer LA-950 (HORIBA) at a flexural modulus of cellulose of 1.48.

(Preparation of microfibrillated cellulose dispersion 1 (CNF aqueous dispersion 1))

An amount of 10 g of the microfibrillated cellulose 1, 150 mg of TEMPO, and 1000 mg of sodium bromide are dispersed in 1000 mL of water. To the dispersion is added a 15% by mass sodium hypochlorite aqueous solution such that the amount of sodium hypochlorite is 5 mmol per gram (absolute dry weight) of the microfibrillated cellulose, and a reaction is initiated. The pH during the reaction is maintained at 10.0 by dropwise adding a 3M aqueous NaOH solution. The reaction is considered to be completed when the pH no longer changed. The reaction product is filtered through a glass filter and then subjected to five cycles of washing with plenty of water and filtration, thereby obtaining water-impregnated, reacted fibers with a solids content of 15% by mass. The fibers are diluted to prepare a 1% by mass CNF aqueous dispersion 1.

(Preparation of microfibrillated cellulose dispersion 2 (CNF aqueous dispersion 2))

A 1% by mass CNF aqueous dispersion 2 is prepared as in the preparation of the CNF aqueous dispersion 1, except for using microfibrillated cellulose 2.

(Preparation of microfibrillated cellulose dispersion 3 (CNF aqueous dispersion 3))

A 1% by mass CNF aqueous dispersion 3 is prepared as in the preparation of the CNF aqueous dispersion 1, except for using microfibrillated cellulose 3.

(Preparation of microfibrillated cellulose dispersion 4 (CNF aqueous dispersion 4))

A 1% by mass CNF aqueous dispersion 4 is prepared as in the preparation of the CNF aqueous dispersion 1, except for using microfibrillated cellulose 4.

(Preparation of masterbatch)

An amount of 1000 mL of the 1% by mass CNF aqueous dispersion and 5 g of a hydrophobizing agent are mixed and dehydrated. An amount of 500 mL of 1-butanol is added to the dehydrated mixture and dispersed by stirring at room temperature (20°C to 30°C) for five minutes using a high-speed homogenizer. The resulting mixture is further dehydrated to obtain a CNF dispersion slurry. To the CNF dispersion slurry are added predetermined amounts of the chemicals according to the formulation recipe in Table 4, and they are stirred at room temperature (20°C to 30°C) for five minutes using a high-speed homogenizer and then dried, thereby obtaining a masterbatch.
The obtained masterbatch is subjected to the measurements described below. Table 4 shows the results.

(Average particle size of masterbatch)

The average particle size is measured using an optical microscope (VHX-7000, Keyence) while the magnification is controlled such that at least 100 fine particles are observed. When a particle has a spherical shape, the particle size is the spherical diameter. When a particle has an acicular or rod shape, the particle size is the minor axis. When a particle has an amorphous shape, the particle size is an average of the particle diameters through the center. An average of the particle sizes of 100 fine particles is calculated and defined as the average particle size.

(Bulk density of masterbatch)

A 50-mL container is fully filled with the masterbatch, and weight a thereof is measured. Next, the container is fully filled with water, and weight b thereof is measured. Then, a ratio (a/b) of the weight a to the weight b is calculated. The ratio is determined as a bulk density.

[Table 4]

| | | MB 1-1 | MB 1-2 | MB 1-3 | MB 1-4 | MB 1-5 | MB 1-6 | MB 1-7 | MB 1-8 | MB 1-9 | MB 1-10 | MB 2-1 | MB 2-2 | MB 2-3 | MB 2-4 | MB 2-5 | MB 2-6 | MB 2-7 | MB 2-8 | MB 2-9 |
|---|---|---|---|---|---|---|---|---|---|---|---|---|---|---|---|---|---|---|---|---|
| Formulation (parts by mass) | Microfibrillated cellulose 1 (solids content) | 30 | 30 | 30 | 40 | | | | 50 | | | 30 | 30 | 30 | 30 | 30 | 30 | 50 | | |
| | Microfibrillated cellulose 2 (solids content) | | | | | 30 | | | | | | | | | | | | | | |
| | Microfibrillated cellulose 3 (solids content) | | | | | | 30 | 30 | | | | | | | | | | | | |
| | Microfibrillated cellulose 4 (solids content) | | | | | | | | | 50 | 30 | | | | | | | | 50 | 30 |
| | Modified liquid polyisoprene | 40 | 30 | | 40 | 40 | 40 | | | | 40 | 40 | 30 | 30 | | | | | | 40 |
| | Modified liquid polybutadiene | | | 30 | | | | 30 | | | | | | | 30 | 20 | 10 | | | |
| | Liquid polybutene | | | | | | | | | | | 30 | | | | | | 50 | 50 | 30 |
| | Liquid polybutadiene | | | | | | | | | | | | | 40 | 40 | 50 | 60 | | | |
| | Oil | 30 | 40 | 40 | 20 | 30 | 30 | 40 | 50 | 50 | 30 | | 40 | | | | | | | |
| | Total | 100 | 100 | 100 | 100 | 100 | 100 | 100 | 100 | 100 | 100 | 100 | 100 | 100 | 100 | 100 | 100 | 100 | 100 | 100 |
| Physical properties | A: Average fiber diameter (um) of microfibrillated cellulose | 0.02 | 0.02 | 0.02 | 0.02 | 0.5 | 10 | 10 | 0.02 | 20 | 20 | 0.02 | 0.02 | 0.02 | 0.02 | 0.02 | 0.02 | 0.02 | 20 | 20 |
| | B: Number average molecular weight of modified diene polymer | 34000 | 34000 | 2700 | 34000 | 34000 | 34000 | 2700 | - | - | 34000 | 34000 | 34000 | 34000 | 2700 | 2700 | 2700 | - | - | 34000 |
| | C: Amount (% by mass) of microfibrillated cellulose in masterbatch | 30 | 30 | 30 | 40 | 30 | 30 | 30 | 50 | 50 | 30 | 30 | 30 | 30 | 30 | 30 | 30 | 50 | 50 | 30 |
| | (A × B)/1000 | 0.68 | 0.68 | 0.054 | 0.68 | 17 | 340 | 27 | - | - | 680 | 0.68 | 0.68 | 0.68 | 0.054 | 0.054 | 0.054 | - | - | 680 |
| | C/A | 1500 | 1500 | 1500 | 2000 | 60 | 3 | 3 | 2500 | 2.5 | 1.5 | 1500 | 1500 | 1500 | 1500 | 1500 | 1500 | 2500 | 2.5 | 1.5 |
| | Average particle size (um) of masterbatch | 90 | 70 | 100 | 100 | 100 | 110 | 110 | 150 | 160 | 150 | 1200 | 70 | 100 | 95 | 90 | 95 | 150 | 160 | 150 |
| | Bulk density ($g/cm^3$) of masterbatch | 0.7 | 0.69 | 0.68 | 0.68 | 0.69 | 0.7 | 0.72 | 0.75 | 0.75 | 0.79 | 0.69 | 0.68 | 0.69 | 0.68 | 0.69 | 0.7 | 0.75 | 0.8 | 0.78 |

<Sidewall>

The chemicals used in production of test tires in examples and comparative examples according to the second aspect of the present invention are listed below.

Masterbatches (MB 1-1 to MB 1-10): produced in the preparations of masterbatch
NR:TSR20
Carbon black: SHOBLACK N550 ($N_2SA$:42 $m^2/g$) available from Cabot Japan K.K.
Antioxidant: Ozonone 6C (N-(1,3-dimethylbutyl)-N'-phenyl-p-phenylenediamine) available from Seiko Chemical Co., Ltd.
Stearic acid: stearic acid "TSUBAKI" available from NOF Corporation
Zinc oxide: zinc oxide #1 available from Mitsui Mining & Smelting Co., Ltd.
Sulfur: powdered sulfur available from Tsurumi Chemical Industry Co., Ltd.
Vulcanization Accelerator: NOCCELER NS (N-tert-butyl-2-benzothiazolylsulfenamide) available from Ouchi Shinko Chemical Industrial Co., Ltd.

(Production of test tire)

According to the formulation recipe shown in Table 5, the materials other than the sulfur and vulcanization accelerators are kneaded for five minutes at 150°C using a 1.7-L Banbury mixer (Kobe Steel, Ltd.) to give a kneaded mixture. Next, the sulfur and vulcanization accelerators are added to the kneaded mixture, and they are kneaded for five minutes at 80°C using an open roll mill to obtain an unvulcanized rubber composition. The unvulcanized rubber composition is press-vulcanized in a 2-mm-thick mold at 170°C for 12 minutes to prepare a vulcanized rubber composition. Separately, the unvulcanized rubber composition is formed into the shape of a sidewall and assembled with other tire components to build an unvulcanized tire. The unvulcanized tire is press-vulcanized at 150°C for 12 minutes to prepare a test tire (size: 175/60R18).

The vulcanized rubber composition and the test tire are subjected to the following evaluations. Table 5 shows the results.

Here, the reference comparative example is Comparative Example 1-3.

(Tensile strength at break)

A tensile test is performed on No. 3 dumbbell-shaped rubber specimens prepared from the vulcanized rubber compositions in accordance with JIS K 6251 "Rubber, vulcanized or thermoplastic - Determination of tensile stress-strain properties" to measure the tensile strength at break. The tensile strength at break of each formulation example is expressed as an index relative to the tensile strength at break of a rubber specimen of the reference comparative example (reference specimen) set to 100 using the equation below. A higher tensile strength at break index means a higher tensile strength at break, indicating better reinforcement.

$$(\text{Tensile strength at break index}) = (\text{Tensile strength at break of each formulation}) / (\text{Tensile strength at break of reference comparative example}) \times 100$$

(Elastic modulus)

The elastic modulus of a 2-mm-thick sheet of the vulcanized rubber composition is measured. Specifically, the 2-mm-thick sheet of the vulcanized rubber composition is warmed at a measurement temperature for 10 minutes. Then, the dynamic elastic modulus of the vulcanized rubber composition sheet is measured under a strain of 2% and a frequency of 10 Hz using a spectrometer available from Ueshima Seisakusho Co., Ltd. The elastic modulus of each formulation is expressed as an index relative to the value of the reference comparative example set to 100 using the equation below. A higher elastic modulus index means a higher elastic modulus, indicating better reinforcement.

(Elastic modulus index) = (Elastic modulus of each formulation)/(Elastic modulus of reference comparative example) × 100

(Fuel economy)

The rolling resistance of the test tire during driving at 80 km/h is measured using a rolling resistance tester. The measured value is expressed as an index relative to the value of the reference comparative example set to 100. A higher index means a lower rolling resistance, indicating better fuel economy.

(Overall performance)

Overall performance in terms of reinforcement and fuel economy is evaluated based on a sum of the three indices obtained in the evaluation of tensile strength at break, the evaluation of elastic modulus, and the evaluation of fuel economy. A higher value indicates better overall performance.

[Table 5]

| | | Example | | | | | | | Comparative Example | | |
|---|---|---|---|---|---|---|---|---|---|---|---|
| | | 1-1 | 1-2 | 1-3 | 1-4 | 1-5 | 1-6 | 1-7 | 1-1 | 1-2 | 1-3 |
| Formulation (parts by mass) | MB 1-1 | 33.4 | | | | | | | | | |
| | MB 1-2 | | 33.4 | | | | | | | | |
| | MB 1-3 | | | 33.4 | | | | | | | |
| | MB 1-4 | | | | 33.4 | | | | | | |
| | MB 1-5 | | | | | 33.4 | | | | | |
| | MB 1-6 | | | | | | 33.4 | | | | |
| | MB 1-7 | | | | | | | 33.4 | | | |
| | MB 1-8 | | | | | | | | 20 | | |
| | MB 1-9 | | | | | | | | | 20 | |
| | MB 1-10 | | | | | | | | | | 33.4 |
| | (Microfibrillated cellulose content) | 10 | 10 | 10 | 10 | 10 | 10 | 10 | 10 | 10 | 10 |
| | NR | 100 | 100 | 100 | 100 | 100 | 100 | 100 | 100 | 100 | 100 |
| | Carbon black N550 | 30 | 30 | 30 | 30 | 30 | 30 | 30 | 30 | 30 | 30 |
| | Antioxidant | 2.5 | 2.5 | 2.5 | 2.5 | 2.5 | 2.5 | 2.5 | 2.5 | 2.5 | 2.5 |
| | Stearic acid | 2 | 2 | 2 | 2 | 2 | 2 | 2 | 2 | 2 | 2 |
| | Zinc oxide | 3 | 3 | 3 | 3 | 3 | 3 | 3 | 3 | 3 | 3 |
| | Sulfur | 1.8 | 1.8 | 1.8 | 1.8 | 1.8 | 1.8 | 1.8 | 1.8 | 1.8 | 1.8 |
| | Vulcanization accelerator | 1 | 1 | 1 | 1 | 1 | 1 | 1 | 1 | 1 | 1 |
| | Total | 173.7 | 173.7 | 173.7 | 173.7 | 173.7 | 173.7 | 173.7 | 160.3 | 160.3 | 173.7 |
| Evaluation | Tensile strength at break | 103 | 103 | 103 | 92 | 106 | 92 | 92 | 92 | 97 | 100 |
| | Elastic modulus | 232 | 179 | 141 | 232 | 197 | 190 | 186 | 65 | 58 | 100 |
| | Fuel economy | 69 | 73 | 85 | 62 | 63 | 72 | 71 | 104 | 89 | 100 |
| | Overall performance | 404 | 355 | 329 | 386 | 366 | 354 | 349 | 261 | 244 | 300 |

<Innerliner>

The chemicals used in production of test tires in examples and comparative examples according to the second

aspect of the present invention are listed below.

Masterbatches (MB 2-1 to MB 2-9): produced in the preparations of masterbatch
Halogenated butyl rubber: Bromobutyl 2255 available from ExxonMobil
Carbon black: SHOBLACK N660 ($N_2SA$:35 $m^2/g$) available from Cabot Japan K.K.
Stearic acid: stearic acid "TSUBAKI" available from NOF Corporation
Vulcanization accelerator: NOCCELER DM (di-2-benzothiazolyl disulfide) available from Ouchi Shinko Chemical Industrial Co., Ltd
Resin: trade name "Petrotack 100V" available from Tosoh Corporation
Zinc oxide: zinc oxide #1 available from Mitsui Mining & Smelting Co., Ltd.
Sulfur: powdered sulfur available from Tsurumi Chemical Industry Co., Ltd.

<Production of test tire>

According to the formulation recipe shown in Table 6, the materials other than the sulfur and vulcanization accelerators are kneaded for five minutes at 150°C using a 1.7-L Banbury mixer (Kobe Steel, Ltd.) to give a kneaded mixture. Next, the sulfur and vulcanization accelerators are added to the kneaded mixture, and they are kneaded for five minutes at 80°C using an open roll mill to obtain an unvulcanized rubber composition. The unvulcanized rubber composition is press-vulcanized in a 2-mm-thick mold at 170°C for 12 minutes to prepare a vulcanized rubber composition. Separately, the unvulcanized rubber composition is formed into the shape of an innerliner and assembled with other tire components to build an unvulcanized tire. The unvulcanized tire is pressvulcanized at 150°C for 12 minutes to prepare a test tire (size: 175/60R18).

The vulcanized rubber composition and the test tire are subjected to the following evaluations. Table 6 shows the results.

Here, the reference comparative example is Comparative Examples 2-1.

(Tensile strength at break)

A tensile test is performed on No. 3 dumbbell-shaped rubber specimens prepared from the vulcanized rubber compositions in accordance with JIS K 6251 "Rubber, vulcanized or thermoplastic - Determination of tensile stress-strain properties" to measure the tensile strength at break. The tensile strength at break of each formulation example is expressed as an index relative to the tensile strength at break of the rubber specimen of the reference comparative example (reference specimen) set to 100 using the equation below. A higher tensile strength at break index means a higher tensile strength at break, indicating better reinforcement.

(Tensile strength at break index) = (Tensile strength at break of each formulation example)/(Tensile strength at break of reference comparative example) × 100

(Elastic modulus)

The elastic modulus of a 2-mm-thick sheet of the vulcanized rubber composition is measured. Specifically, the 2-mm-thick sheet of the vulcanized rubber composition is warmed at a measurement temperature for 10 minutes. Then, the dynamic elastic modulus of the vulcanized rubber composition sheet is measured under a strain of 2% and a frequency of 10 Hz using a spectrometer available from Ueshima Seisakusho Co., Ltd. The elastic modulus of each formulation is expressed as an index relative to the value of the reference comparative example set to 100 using the equation below. A higher elastic modulus index means a higher elastic modulus, indicating better reinforcement.

(Elastic modulus index) = (Elastic modulus of each formulation)/(Elastic modulus of reference comparative example) × 100

(Fuel economy)

The rolling resistance of the test tire during driving at 80 km/h is measured using a rolling resistance tester. The measured value is expressed as an index relative to the value of the reference comparative example set to 100. A higher index means a lower rolling resistance, indicating better fuel economy.

(Overall performance)

Overall performance in terms of reinforcement and fuel economy is evaluated based on a sum of the three indices obtained in the evaluation of tensile strength at break, the evaluation of elastic modulus, and the evaluation of fuel economy. A higher value indicates better overall performance.

[Table 6]

| | | Example | | | | | | Comparative Example | | |
|---|---|---|---|---|---|---|---|---|---|---|
| | | 2-1 | 2-2 | 2-3 | 2-4 | 2-5 | 2-6 | 2-1 | 2-2 | 2-3 |
| Formulation (parts by mass) | MB2-1 | 33.4 | | | | | | | | |
| | MB2-2 | | 33.4 | | | | | | | |
| | MB2-3 | | | 33.4 | | | | | | |
| | MB2-4 | | | | 33.4 | | | | | |
| | MB2-5 | | | | | 33.4 | | | | |
| | MB2-6 | | | | | | 33.4 | | | |
| | MB2-7 | | | | | | | 20 | | |
| | MB2-8 | | | | | | | | 20 | |
| | MB2-9 | | | | | | | | | 33.4 |
| | (Microfibrillated cellulose content) | 10 | 10 | 10 | 10 | 10 | 10 | 10 | 10 | 10 |
| | Halogenated butyl rubber | 100 | 100 | 100 | 100 | 100 | 100 | 100 | 100 | 100 |
| | Carbon black N660 | 50 | 50 | 50 | 50 | 50 | 50 | 50 | 50 | 50 |
| | Stearic acid | 1 | 1 | 1 | 1 | 1 | 1 | 1 | 1 | 1 |
| | Vulcanization accelerator | 1 | 1 | 1 | 1 | 1 | 1 | 1 | 1 | 1 |
| | Resin | 3 | 3 | 3 | 3 | 3 | 3 | 3 | 3 | 3 |
| | Zinc oxide | 1 | 1 | 1 | 1 | 1 | 1 | 1 | 1 | 1 |
| | Sulfur | 0.5 | 0.5 | 0.5 | 0.5 | 0.5 | 0.5 | 0.5 | 0.5 | 0.5 |
| | Total | 189.9 | 189.9 | 189.9 | 189.9 | 189.9 | 189.9 | 176.5 | 176.5 | 189.9 |
| Evaluation | Tensile strength at break | 77 | 84 | 75 | 74 | 73 | 72 | 100 | 80 | 75 |
| | Elastic modulus | 148 | 118 | 138 | 140 | 130 | 125 | 100 | 63 | 70 |
| | Fuel economy | 111 | 114 | 104 | 101 | 102 | 105 | 100 | 123 | 137 |
| | Overall performance | 336 | 316 | 317 | 315 | 305 | 302 | 300 | 266 | 282 |

Exemplary embodiments of the present invention include:

Embodiment A. A tire including a tire component including a rubber composition,

the rubber composition containing:

organic fibers, preferably biomass-derived organic fibers, more preferably at least one selected from the group consisting of cellulose nanofibers and cellulose nanocrystals, still more preferably cellulose nanofibers;
a polymer having a moiety derived from at least one compound selected from the group consisting of maleic acid, maleic anhydride, and derivatives thereof; and
a filler,
the tire component having a ratio of a complex modulus of elasticity at 30°C (30°C E*a (MPa)) in a tire circumferential direction to a loss tangent at 30°C (30°C tan δa) in the tire circumferential direction (30°C E*a/30°C tan δa) of 33 or higher, preferably 45 or higher and/or 72 or lower, preferably 65 lower.

Embodiment B. The tire according to Embodiment A,
wherein the tire component has a ratio of a complex modulus of elasticity at 30°C (30°C E*a (MPa)) in the tire circumferential direction to a loss tangent at 30°C (30°C tan δa) in the tire circumferential direction (30°C E*a/30°C tan δa) of 33 or higher and 72 or lower, preferably 45 or higher and 65 or lower.
Embodiment C. The tire according to Embodiment A or B,
wherein the tire component has a filler content Fc (parts by mass) per 100 parts by mass of a rubber component content and a complex modulus of elasticity at 30°C (30°C E*a (MPa)) in the tire circumferential direction which satisfy the following formula:

$$Fc/30°C\ E^*a \leq 6.00.$$

Embodiment D. The tire according to any one of Embodiments A to C,
wherein the polymer is at least one selected from the group consisting of: a copolymer of an aromatic vinyl compound unit and a unit of at least one compound selected from the group consisting of maleic acid, maleic anhydride, and derivatives thereof, preferably a copolymer of styrene and at least one compound selected from the group consisting of maleic acid, maleic anhydride, and derivatives thereof; and a modified liquid polyisoprene modified with at least one compound selected from the group consisting of maleic acid, maleic anhydride, and derivatives thereof.
Embodiment E. The tire according to any one of Embodiments A to D,
wherein the tire component has a loss tangent at 30°C (30°C tan δa) in the tire circumferential direction and a loss tangent at 30°C (30°C tan δb) in a tire radial direction which satisfy the following formula:

$$30°C\ \tan\delta a/30°C\ \tan\delta b \geq 1.00.$$

Embodiment F. The tire according to any one of Embodiments A to E,
wherein the rubber composition contains the filler in an amount of 10 to 55 parts by mass per 100 parts by mass of a rubber component content.
Embodiment G. The tire according to any one of Embodiments A to F,
wherein the tire component has a complex modulus of elasticity at 30°C (30°C E*a (MPa)) in the tire circumferential direction and a loss tangent at 30°C (30°C tan δa) in the tire circumferential direction which satisfy the following formulas:

$$30°C\ E^*a \geq 5.0\ MPa$$

$$30°C\ \tan\delta a \geq 0.120.$$

Embodiment H. The tire according to any one of Embodiments A to G,
wherein the rubber composition contains a silica having an average particle size of 18 nm or less.
Embodiment I. The tire according to any one of Embodiments A to H,
wherein the rubber composition contains polybutadiene rubber.
Embodiment J. A masterbatch, containing:

a microfibrillated cellulose having an average fiber diameter of 10 μm or less; and
a diene polymer having a moiety derived from at least one compound selected from the group consisting of carboxylic acid and carboxylic anhydride, preferably the diene polymer having a number average molecular weight of 35000 or less,
the microfibrillated cellulose having an average fiber diameter A (um) and the diene polymer having a number average molecular weight B, the A and the B satisfying the following formula:

$$(A \times B)/1000 \leq 350.$$

Embodiment K. The masterbatch according to Embodiment J,
wherein the masterbatch has a microfibrillated cellulose content C (% by mass) based on 100% by mass of the masterbatch and the microfibrillated cellulose has an average fiber diameter A (μm), the C and the A satisfying the following formula:

$$C/A \geq 3.$$

Embodiment L. The masterbatch according to Embodiment J or K, further containing a liquid polybutene.
Embodiment M. The masterbatch according to any one of Embodiments J to L, further containing a plant oil.
Embodiment N. A rubber composition containing the masterbatch according to any one of Embodiments J to M and a rubber component.
Embodiment O. A tire including a tire component including the rubber composition according to Embodiment N, preferably at least one of a sidewall or an innerliner.

## Claims

1. A tire comprising a tire component including a rubber composition,
the rubber composition comprising:

   organic fibers, preferably biomass-derived organic fibers, more preferably at least one selected from the group consisting of cellulose nanofibers and cellulose nanocrystals, still more preferably cellulose nanofibers;
   a polymer having a moiety derived from at least one compound selected from the group consisting of maleic acid, maleic anhydride, and derivatives thereof; and
   a filler,
   the tire component having a ratio of a complex modulus of elasticity at 30°C (30°C E*a (MPa)) in a tire circumferential direction to a loss tangent at 30°C (30°C tan δa) in the tire circumferential direction (30°C E*a/30°C tan δa) of 33 or higher, preferably 45 or higher and/or 72 or lower, preferably 65 lower.

2. The tire according to claim 1,
wherein the tire component has a ratio of a complex modulus of elasticity at 30°C (30°C E*a (MPa)) in the tire circumferential direction to a loss tangent at 30°C (30°C tan δa) in the tire circumferential direction (30°C E*a/30°C tan δa) of 33 or higher and 72 or lower, preferably 45 or higher and 65 or lower.

3. The tire according to claim 1 or 2,
wherein the tire component has a filler content Fc (parts by mass) per 100 parts by mass of a rubber component content and a complex modulus of elasticity at 30°C (30°C E*a (MPa)) in the tire circumferential direction which satisfy the following formula:

$$Fc/30°C\ E^*a \leq 6.00.$$

4. The tire according to any one of claims 1 to 3,
wherein the polymer is at least one selected from the group consisting of: a copolymer of an aromatic vinyl compound

unit and a unit of at least one compound selected from the group consisting of maleic acid, maleic anhydride, and derivatives thereof, preferably a copolymer of styrene and at least one compound selected from the group consisting of maleic acid, maleic anhydride, and derivatives thereof; and a modified liquid polyisoprene modified with at least one compound selected from the group consisting of maleic acid, maleic anhydride, and derivatives thereof.

**5.** The tire according to any one of claims 1 to 4, wherein the tire component has a loss tangent at 30°C (30°C tan δa) in the tire circumferential direction and a loss tangent at 30°C (30°C tan δb) in a tire radial direction which satisfy the following formula:

$$30°C \tan \delta a / 30°C \tan \delta b \geq 1.00.$$

**6.** The tire according to any one of claims 1 to 5, wherein the rubber composition contains the filler in an amount of 10 to 55 parts by mass per 100 parts by mass of a rubber component content.

**7.** The tire according to any one of claims 1 to 6, wherein the tire component has a complex modulus of elasticity at 30°C (30°C E*a (MPa)) in the tire circumferential direction and a loss tangent at 30°C (30°C tan δa) in the tire circumferential direction which satisfy the following formulas:

$$30°C\ E^*a \geq 5.0\ MPa$$

$$30°C \tan \delta a \geq 0.120.$$

**8.** The tire according to any one of claims 1 to 7, wherein the rubber composition contains a silica having an average particle size of 18 nm or less.

**9.** The tire according to any one of claims 1 to 8, wherein the rubber composition contains polybutadiene rubber.

**10.** A masterbatch, comprising:

a microfibrillated cellulose having an average fiber diameter of 10 μm or less; and
a diene polymer having a moiety derived from at least one compound selected from the group consisting of carboxylic acid and carboxylic anhydride, preferably the diene polymer having a number average molecular weight of 35000 or less,
the microfibrillated cellulose having an average fiber diameter A (μm) and the diene polymer having a number average molecular weight B, the A and the B satisfying the following formula:

$$(A \times B)/1000 \leq 350.$$

**11.** The masterbatch according to claim 10, wherein the masterbatch has a microfibrillated cellulose content C (% by mass) based on 100% by mass of the masterbatch and the microfibrillated cellulose has an average fiber diameter A (μm), the C and the A satisfying the following formula:

$$C/A \geq 3.$$

**12.** The masterbatch according to claim 10 or 11, further comprising a liquid polybutene.

**13.** The masterbatch according to any one of claims 10 to 12, further comprising a plant oil.

**14.** A rubber composition comprising the masterbatch according to any one of claims 10 to 13 and a rubber component.

**15.** A tire comprising a tire component including the rubber composition according to claim 14, preferably at least one of a sidewall or an innerliner.